(19) **Europäisches Patentamt**
**European Patent Office**
**Office européen des brevets**

(11) **EP 2 884 383 A1**

(12) # EUROPEAN PATENT APPLICATION
published in accordance with Art. 153(4) EPC

(43) Date of publication:
**17.06.2015 Bulletin 2015/25**

(51) Int Cl.:
***G06F 3/14*** (2006.01)

(21) Application number: **13842060.9**

(86) International application number:
**PCT/CN2013/081387**

(22) Date of filing: **13.08.2013**

(87) International publication number:
**WO 2014/048180 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.09.2012 CN 201210375886**
**12.10.2012 CN 201210387215**

(71) Applicant: **Huawei Technologies Co., Ltd.**
**Longgang District**
**Shenzhen, Guangdong 518129 (CN)**

(72) Inventors:
• **DING, Qiang**
**Shenzhen**
**Guangdong 518129 (CN)**
• **LI, Li**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **METHOD AND APPARATUS FOR CONTROLLING TERMINAL DEVICE BY USING NON-CONTACT GESTURE**

(57) Embodiments of the present invention disclose a method and an apparatus for controlling a terminal device by using a non-touch gesture, which are applicable to a terminal device including one or multiple light sensors. The method includes: receiving multiple light intensity signals that are output by the light sensor according to a light intensity change in a period of time and reflect the light intensity change, where the light intensity change is generated by the non-touch gesture; determining whether a change rule of the output multiple light intensity signals is compliant with a preset change rule corresponding to the non-touch gesture, and if compliant, recognizing the non-touch gesture corresponding to the multiple light intensity signals; and executing a control operation corresponding to the recognized non-touch gesture, for a terminal application. The embodiments of the present invention can control the terminal device by using a non-touch gesture simply and efficiently through a software method on the terminal device, which enhanc-es user experience.

Receive multiple light intensity signals that are output by a light sensor according to a light intensity change in a period of time and reflect the light intensity change, where the light intensity change is generated by a non-touch gesture — S11

Determine whether a change rule of the multiple light intensity signals is compliant with a preset change rule corresponding to the non-touch gesture, and if compliant, recognize the non-touch gesture corresponding to the multiple light intensity signals — S12

Execute a control operation corresponding to the recognized non-touch gesture, for a terminal application — S13

FIG. 1

EP 2 884 383 A1

**Description**

**CROSS-REFERENCE TO RELATED APPLICATIONS**

This application claims priority to Chinese Patent Application No. 201210375886.9, filed with the Chinese Patent Office on September 29, 2012 and entitled "METHOD AND APPARATUS FOR CONTROLLING TERMINAL DEVICE BY USING NON-TOUCH GESTURE", and Chinese Patent Application No. 201210387215.4, filed with the Chinese Patent Office on October 12, 2012 and entitled "METHOD AND APPARATUS FOR CONTROLLING TERMINAL DEVICE BY USING NON-TOUCH GESTURE", both of which are incorporated herein by reference in their entireties.

**TECHNICAL FIELD**

The present invention relates to the field of communication technologies, and in particular, to a method and an apparatus for controlling a terminal device by using a non-touch gesture.

**BACKGROUND**

With continuous development of capabilities of smart terminal devices, people can process complex tasks on a smart terminal such as a smart phone and a tablet computer (a tablet PC), for example, read an e-book, browse a multimedia picture, play music and a video, and browse a Web page. Therefore, it is necessary for a user to frequently exchange information with a mobile smart terminal, for example, perform basic operations such as picture switching and zooming, pausing or playing of music and videos, volume adjustment, and page dragging in Web browsing.

Most existing smart terminals generally adopt touch gesture recognition for inputting, that is, the single-point or multipoint touch or action of a finger or palm on a touch screen is sensed through the touch screen and mapped to a corresponding operation instruction. However, this input approach requires that the user should perform operations on the touch screen with a hand; there are many restrictions on the user, and experience of man-machine interaction is not natural enough.

Compared with conventional touch gesture operations, non-touch gesture operations, and in particular, controlling a mobile smart terminal with a hand or an arm not touching the terminal, can achieve more smooth and natural experience, and provide great convenience for the user in a scenario where it is inconvenient for the user to perform operations on the screen with a hand (for example, when the user is cooking in the kitchen or is outside in winter).

Existing non-touch gesture recognition technologies mainly include two-dimensional and three-dimensional optical image recognition methods and the like. In the process of implementing the present invention, the inventor finds that the prior art has at least disadvantages of high algorithm complexity, large power consumption, and special requirements on the hardware configuration of the smart terminal, and therefore. The smart terminal cannot be controlled by using a non-touch gesture simply and efficiently through software based on the existing hardware configuration of the smart terminal.

**SUMMARY**

In view of this, embodiments of the present invention provide a method and an apparatus for controlling a terminal device by using a non-touch gesture, so as to control a smart terminal by using a non-touch gesture simply and efficiently through software based on the existing hardware configuration of the smart terminal.

In a first aspect, the present invention provides a method for controlling a terminal device by using a non-touch gesture, where the method is applicable to a terminal device including one or multiple light sensors, and the method includes: receiving multiple light intensity signals that are output by the light sensor according to a light intensity change in a period of time and reflect the light intensity change, where the light intensity change is generated by the non-touch gesture; determining whether a change rule of the output multiple light intensity signals is compliant with a preset change rule corresponding to the non-touch gesture, and if compliant, recognizing the non-touch gesture corresponding to the multiple light intensity signals; and executing a control operation corresponding to the recognized non-touch gesture, for a terminal application.

In a first possible implementation of the first aspect, the one or multiple light sensors include a first light sensor, and the non-touch gesture includes a swipe gesture, where the swipe gesture includes a unidirectional swipe of an operation object in a sensing range of the first light sensor; and the preset change rule corresponding to the non-touch gesture includes: light intensity reflected by multiple light intensity signals being compliant with a decreasing change rule and then compliant with an increasing change rule in a first predetermined period of time.

In a second possible implementation of the first aspect, the multiple light sensors include a first light sensor and a second light sensor, and the non-touch gesture includes a right-swipe gesture, where the right-swipe gesture includes a left-to-right swipe of an operation object in a sensing range of the first light sensor and the second light sensor; and the preset change rule corresponding to the non-touch gesture includes: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, where the first light sensor is placed to the left of the second light sensor.

In a third possible implementation of the first aspect, the multiple light sensors include a first light sensor and a second light sensor, and the non-touch gesture includes a left-swipe gesture, where the left-swipe gesture includes a right-to-left swipe of an operation object in a sensing range of the first light sensor and the second light sensor; and the preset change rule corresponding to the non-touch gesture includes: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, where the first light sensor is placed to the left of the second light sensor.

With reference to the second or third possible implementation of the first aspect, in a fourth possible implementation, when the terminal device includes multiple light sensors, an equal horizontal distance exists between placement positions of any two adjacent light sensors, and the horizontal distance is maximal.

In a fifth possible implementation of the first aspect, the multiple light sensors include a first light sensor and a second light sensor, and the non-touch gesture includes a down-swipe gesture, where the down-swipe gesture includes a top-to-down swipe of an operation object in a sensing range of the first light sensor and the second light sensor; and the preset change rule corresponding to the non-touch gesture includes: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, where the first light sensor is placed above the second light sensor.

In a sixth possible implementation of the first aspect, the multiple light sensors include a first light sensor and a second light sensor, and the non-touch gesture includes an up-swipe gesture, where the up-swipe gesture includes a bottom-to-up swipe of an operation object in a sensing range of the first light sensor and the second light sensor; and the preset change rule corresponding to the non-touch gesture includes: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, where the first light sensor is placed above the second light sensor.

With reference to the fifth or sixth possible implementation of the first aspect, in a seventh possible implementation, when the terminal device includes multiple light sensors, an equal vertical distance exists between placement positions of any two adjacent light sensors, and the vertical distance is maximal.

With reference to any one of the first to seventh possible implementations of the first aspect, in an eighth possible implementation, the first predetermined period of time is a typical value of time needed when a user makes a unidirectional swipe with respect to any sensor, and the unidirectional swipe may be any one of the following: a left-to-right swipe, a right-to-left swipe, a top-to-down swipe, and a bottom-to-up swipe.

With reference to any one of the second to seventh possible implementations of the first aspect, in a ninth possible implementation, the second predetermined period of time is a typical value of a time interval between first time of recognizing the first swipe gesture corresponding to the multiple light intensity signals output by the first light sensor and second time of recognizing the second swipe gesture corresponding to the multiple light intensity signals output by the second light sensor.

With reference to any one of the first to ninth possible implementations of the first aspect, in a tenth possible implementation, the multiple light intensity signals include a first light intensity signal, a second light intensity signal, and a third light intensity signal, where time of receiving the second light intensity signal is later than time of receiving the first light intensity signal, and time of receiving the third light intensity signal is later than the time of receiving the second light intensity signal; the decreasing change rule includes: signal intensity reflected by the second light intensity signal being smaller than signal intensity reflected by the first light intensity signal among the multiple light intensity signals, with a decrement not smaller than a first threshold; and the increasing change rule includes: signal intensity reflected by the third light intensity signal being greater than signal intensity reflected by the second light intensity signal among the multiple light intensity signals, with an increment not smaller than a second threshold.

In an eleventh possible implementation of the first aspect, the first threshold is a typical decrement of light intensity when the light sensor is blocked by the operation object that generates the swipe gesture; and the second threshold is a typical increment of light intensity when the operation object that generates the swipe gesture leaves after the light sensor is blocked.

In a twelfth possible implementation of the first aspect, the light sensors include a first light sensor, and the non-touch gesture includes an uplift gesture, where the uplift gesture includes a progressive motion of an operation object in a sensing range of the first light sensor in a direction away from the first light sensor; and the preset change rule corresponding to the non-touch gesture includes: light intensity reflected by multiple light intensity signals being compliant with a first decreasing change rule, then remaining unchanged in a first predetermined period of time, then being compliant with an increasing change rule, and then remaining unchanged in a second predetermined period of time.

In a thirteenth possible implementation of the first aspect, the light sensors include a first light sensor, and the non-touch gesture includes a press gesture, where the press gesture includes a progressive motion of an operation object in a sensing range of the first light sensor in a direction toward the first light sensor; and the preset change rule corresponding to the non-touch gesture includes: light intensity reflected by multiple light intensity signals being compliant with a first decreasing change rule, then remaining unchanged in a first predetermined period of time, then being compliant with a second decreasing change rule, and then remaining unchanged in a second predetermined period of time.

In a fourteenth possible implementation of the first aspect, the light sensors include a first light sensor, and the non-touch gesture includes at least one uplift gesture and at least one press gesture, where the press gesture includes a progressive motion of an operation object in a sensing range of the first light sensor in a direction toward the first light sensor, and the uplift gesture includes a progressive motion of the operation object in the sensing range of the first light sensor in a direction away from the first light sensor; and the preset change rule corresponding to the non-touch gesture includes: light intensity being compliant with a first decreasing change rule, then remaining unchanged in a first predetermined period of time, then fluctuating between high and low, and then remaining unchanged in a second predetermined period of time.

In a fifteenth possible implementation of the first aspect, the multiple light sensors are N light sensors, and the non-touch gesture includes an uplift gesture, where the uplift gesture includes a progressive motion of an operation object in a sensing range of at least two light sensors among the N light sensors in a direction away from the at least two light sensors; and the preset change rule corresponding to the non-touch gesture includes: light intensity reflected by light intensity signals output by A light sensors among the N light sensors being respectively compliant with a first decreasing change rule, and then remaining unchanged in a first predetermined period of time; then light intensity reflected by light intensity signals output by B light sensors among the A light sensors being respectively compliant with an increasing change rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

In a sixteenth possible implementation of the first aspect, the multiple light sensors are N light sensors, and the non-touch gesture includes a press gesture, where the press gesture includes a progressive motion of an operation object in a sensing range of at least two light sensors among the N light sensors in a direction toward the at least two light sensors; and the preset change rule corresponding to the non-touch gesture includes: light intensity reflected by light intensity signals output by A light sensors among the N light sensors being respectively compliant with a first decreasing change rule, and then remaining unchanged in a first predetermined period of time; then light intensity reflected by light intensity signals output by B light sensors among the A light sensors being respectively compliant with a second decreasing change rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

In a seventeenth possible implementation of the first aspect, the multiple light sensors are N light sensors, and the non-touch gesture includes at least one press gesture and at least one uplift gesture, where the press gesture includes a progressive motion of an operation object in a sensing range of at least two light sensors among the N light sensors in a direction toward the at least two light sensors, and the uplift gesture includes a progressive motion of the operation object in a sensing range of at least two light sensors among the N light sensors in a direction away from the at least two light sensors; and the preset change rule corresponding to the non-touch gesture includes: light intensity reflected by light intensity signals output by A light sensors among the N light sensors being respectively compliant with a first decreasing change rule, and then remaining unchanged in a first predetermined period of time; then light intensity reflected by light intensity signals output by B light sensors among the A light sensors being respectively compliant with a decreasing fluctuation rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

With reference to the twelfth or fifteenth possible implementation of the first aspect, in an eighteenth possible implementation, the multiple light intensity signals include a first light intensity signal, a second light intensity signal, a third light intensity signal, a fourth light intensity signal, and a fifth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the increasing change rule includes: signal intensity reflected by the fourth light intensity signal among the multiple light intensity signals being greater than signal intensity reflected by the third light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

With reference to the thirteenth or sixteenth possible implementation of the first aspect, in a nineteenth possible implementation, the multiple light intensity signals include a first light intensity signal, a second light intensity signal, a third light intensity signal, a fourth light intensity signal, and a fifth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the second decreasing change rule includes: signal intensity reflected by the fourth light intensity signal among the multiple light intensity signals being smaller than signal intensity reflected by the third light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

With reference to the fourteenth or seventeenth possible implementation of the first aspect, in a twentieth possible implementation, the multiple light intensity signals include a first light intensity signal, a second light intensity signal, a third light intensity signal, a fourth light intensity signal, a fifth light intensity signal, and a sixth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, time of receiving the fifth light intensity signal is later than the time of receiving the fourth light intensity signal, and time of receiving the sixth light intensity signal is later than the time of receiving the fifth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the second decreasing change rule includes: signal intensity reflected by the fourth light intensity signal among the multiple light intensity signals being smaller than signal intensity reflected by the third light intensity signal among the multiple light intensity signals; the decreasing fluctuation rule includes: signal intensity reflected by the fourth light intensity signal among the multiple light intensity signals being smaller than signal intensity reflected by the third light intensity signal among the multiple light intensity signals, and then signal intensity reflected by the fifth light intensity signal among the multiple light intensity signals being greater than signal intensity reflected by the fourth light intensity signal among the multiple light intensity signals; or signal intensity reflected by the fourth light intensity signal among the multiple light intensity signals being greater than signal intensity reflected by the third light intensity signal among the multiple light intensity signals, and then signal intensity reflected by the fifth light intensity signal among the multiple light intensity signals being smaller than signal intensity reflected by the fourth light intensity signal among the multiple light intensity signals; and the remaining unchanged in a second predetermined period of time includes: signal intensity reflected by the sixth light intensity signal among the multiple light intensity signals being not smaller than signal intensity reflected by the fifth light intensity signal among the multiple light intensity signals, with an increment not greater than the fourth threshold, or, signal intensity reflected by the sixth light intensity signal being not greater than signal intensity reflected by the fifth light intensity signal among the multiple light intensity signals, with a decrement not greater than the fourth threshold.

With reference to any one of the twelfth to seventeenth possible implementations of the first aspect, in a twenty-first possible implementation, the first predetermined period of time is a typical value of a time interval between time of blocking the light sensor by the operation object that generates the press gesture or the uplift gesture and time of starting pressing or starting uplifting; the second predetermined period of time is a typical value of a duration in which the light sensor is blocked when the operation object that generates the press gesture or the uplift gesture keeps motionless after being pressed or uplifted to some extent; and the third predetermined period of time is a typical value of a time interval between detection time of recognizing the press gesture or the uplift gesture and time of blocking the light sensor by the operation object that generates the press gesture or the uplift gesture.

With reference to any one of the eighteenth to twentieth possible implementations of the first aspect, in a twenty-second possible implementation, the third threshold is a typical decrement of light intensity when the light sensor is blocked by the operation object that generates the uplift gesture or the press gesture or gestures including at least one uplift gesture and at least one press gesture; and the fourth threshold is a typical increment or decrement of light intensity caused by the motionless operation object after the light sensor is blocked by the operation object that generates the uplift gesture or the press gesture or gestures including at least one uplift gesture and at least one press gesture and before starting of uplifting or pressing.

With reference to any one of the fifteenth to seventeenth possible implementations of the first aspect, in a twenty-third possible implementation, the first threshold is not smaller than N/2, and the second threshold is not smaller than A/2.

With reference to any one of the first to twenty-third possible implementations of the first aspect, in a twenty-fourth possible implementation, the terminal device includes a motion sensor or an orientation sensor; receiving a signal value output by the motion sensor or the orientation sensor; determining whether a mobile phone is in a relatively stable state; and if not, not triggering the step of determining whether the change rule of the output multiple light intensity signals is compliant with the preset change rule corresponding to the non-touch gesture.

With reference to any one of the first to twenty-fourth possible implementations of the first aspect, in a twenty-fifth possible implementation, the determining whether the change rule of the output multiple light intensity signals is compliant with the preset change rule corresponding to the non-touch gesture includes: every time when one of the light intensity signals output by the light sensor is received, determining, according to one or more of the light intensity signals output by the light sensor which are received last time or multiple times, whether the change rule of the output multiple light intensity signals is compliant with the preset change rule corresponding to the non-touch gesture.

With reference to any one of the first to twenty-fifth possible implementations of the first aspect, in a twenty-sixth possible implementation, the non-touch gesture includes an up-swipe gesture, or a down-swipe gesture, or a left-swipe gesture, or a right-swipe gesture, and the terminal application includes a picture application or an e-book application, where: the up-swipe gesture includes a bottom-to-up swipe of the operation object in the sensing range of the first light sensor and the second light sensor; the down-swipe gesture includes a top-to-down swipe of the operation object in the sensing range of the first light sensor and the second light sensor; the left-swipe gesture includes a right-to-left swipe of the operation object in the sensing range of the first light sensor and the second light sensor; and the right-swipe gesture includes a left-to-right swipe of the operation object in the sensing range of the first light sensor and the second light sensor; and the executing a control operation corresponding to the recognized non-touch gesture, for a terminal application includes: executing a control operation of up page flipping or dragging, down page flipping or dragging, left page flipping or dragging, or right page flipping or dragging respectively corresponding to the up-swipe gesture, or the down-swipe gesture, or the left-swipe gesture, or the right-swipe gesture, for the picture or e-book application.

With reference to any one of the first to twenty-fifth possible implementations of the first aspect, in a twenty-seventh possible implementation, when the non-touch gesture includes a press gesture and/or an uplift gesture, and the terminal application includes a picture application or an e-book application, the executing a control operation corresponding to the recognized non-touch gesture, for a terminal application includes: executing a zoom operation corresponding to the press gesture and/or the uplift gesture, for the picture application or the e-book application.

With reference to any one of the twelfth, fifteenth, and eighteenth possible implementations of the first aspect, in a twenty-eighth possible implementation, the method further includes obtaining an uplift extent of the uplift gesture; and the executing a control operation corresponding to the recognized non-touch gesture, for a terminal application includes: executing a zoom operation corresponding to the uplift gesture, for the picture application or the e-book application, where a zoom ratio is determined according to the uplift extent when the zoom operation is executed.

With reference to any one of the thirteenth, sixteenth, and nineteenth possible implementations of the first aspect, in a twenty-ninth possible implementation, the method further includes obtaining a press extent of the press gesture; and the executing a control operation corresponding to the recognized non-touch gesture, for a terminal application includes: executing a zoom operation corresponding to the press gesture, for the picture application or the e-book application, where a zoom ratio is determined according to the press extent when the zoom operation is executed.

In a thirtieth possible implementation of the first aspect, the multiple light sensors are N light sensors, and the non-touch gesture includes an uplift gesture, where the uplift gesture includes a progressive motion of an operation object in a sensing range of at least two light sensors among the N light sensors in a direction away from the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with an increasing change rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

With reference to the twelfth or thirteenth possible implementation of the first aspect, in a thirty-first possible implementation, the multiple light intensity signals include a first light intensity signal, a second light intensity signal, a third light intensity signal, a fourth light intensity signal, and a fifth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the increasing change rule includes: signal intensity reflected by the fourth light intensity signal among the multiple light intensity signals being greater than signal intensity reflected by the third light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

In a thirty-second possible implementation of the first aspect, the multiple light sensors are N light sensors, and the non-touch gesture includes a press gesture, where the press gesture includes a progressive motion of an operation object in a sensing range of at least two light sensors among the N light sensors in a direction toward the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a second decreasing change rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

With reference to the thirteenth or thirty-second possible implementation of the first aspect, in a thirty-third possible implementation, the multiple light intensity signals include a first light intensity signal, a second light intensity signal, a third light intensity signal, a fourth light intensity signal, and a fifth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the second decreasing change rule includes: signal intensity reflected by the fourth light intensity signal among the multiple light intensity signals being smaller than signal intensity reflected by the third light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

In a thirty-fourth possible implementation of the first aspect, the light sensors include a first light sensor, and the non-touch gesture includes at least one uplift gesture and at least one press gesture, where the press gesture includes a progressive motion of an operation object in a sensing range of the first light sensor in a direction toward the first light sensor, and the uplift gesture includes a progressive motion of the operation object in the sensing range of the first light sensor in a direction away from the first light sensor; and the preset change rule corresponding to the non-touch gesture includes: light intensity being compliant with a first decreasing change rule, then remaining unchanged in a first predetermined period of time, then being compliant with a decreasing fluctuation rule, and then remaining unchanged in a second predetermined period of time.

With reference to the seventeenth or thirty-fourth possible implementation of the first aspect, in a thirty-fifth possible implementation, the multiple light intensity signals include a first light intensity signal, a second light intensity signal, a third light intensity signal, a fourth light intensity signal, a fifth light intensity signal, and a sixth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, time of receiving the fifth light intensity signal is later than the time of receiving the fourth light intensity signal, and time of receiving the sixth light intensity signal is later than the time of receiving the fifth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the second decreasing change rule includes: signal intensity reflected by the fourth light intensity signal among the multiple light intensity signals being smaller than signal intensity reflected by the third light intensity signal among the multiple light intensity signals; the decreasing fluctuation rule includes: signal intensity reflected by the fourth light intensity signal among the multiple light intensity signals being smaller than signal intensity reflected by the third light intensity signal among the multiple light intensity signals, and then signal intensity reflected by the fifth light intensity signal among the multiple light intensity signals being greater than signal intensity reflected by the fourth light intensity signal among the multiple light intensity signals; or signal intensity reflected by the fourth light intensity signal among the multiple light intensity signals being greater than signal intensity reflected by the third light intensity signal among the multiple light intensity signals, and then signal intensity reflected by the fifth light intensity signal among the multiple light intensity signals being smaller than signal intensity reflected by the fourth light intensity signal among the multiple light intensity signals; and the remaining unchanged in a second predetermined period of time includes: signal intensity reflected by the sixth light intensity signal among the multiple light intensity signals being not smaller than signal intensity reflected by the fifth light intensity signal among the multiple light intensity signals, with an increment not greater than the fourth threshold, or, signal intensity reflected by the sixth light intensity signal being not greater than signal intensity reflected by the fifth light intensity signal among the multiple light intensity signals, with a decrement not greater than the fourth threshold.

With reference to any one of the twelfth, thirteenth, and thirtieth to thirty-third possible implementations of the first aspect, in a thirty-sixth possible implementation, the first predetermined period of time is a typical value of a time interval between time of blocking the light sensor by the operation object that generates the press gesture or the uplift gesture and time of starting pressing or starting uplifting; and the second predetermined period of time is a typical value of a duration in which the light sensor is blocked when the operation object that generates the press gesture or the uplift gesture keeps motionless after being pressed or uplifted to some extent.

With reference to any one of the thirty-first, thirty-third, and thirty-fifth possible implementations of the first aspect, in a thirty-seventh possible implementation, the third predetermined period of time is a typical value of a time interval between detection time of recognizing the press gesture or the uplift gesture and time of blocking the light sensor by the operation object that generates the press gesture or the uplift gesture.

With reference to any one of the thirty-first, thirty-third, and thirty-fifth possible implementations of the first aspect, in a thirty-eighth possible implementation, the third threshold is a typical decrement of light intensity when the light sensor is blocked by the operation object that generates the uplift gesture or the press gesture or gestures including at least one uplift gesture and at least one press gesture; and the fourth threshold is a typical increment or decrement of light intensity caused by the motionless operation object after the light sensor is blocked by the operation object that generates the uplift gesture or the press gesture or gestures including at least one uplift gesture and at least one press gesture and before starting of uplifting or pressing.

With reference to any one of the seventeenth, thirtieth, and thirty-second possible implementations of the first aspect, in a thirty-ninth possible implementation, the first threshold is not smaller than N/2, and the second threshold is not smaller than A/2.

With reference to the first aspect or any one of the first to thirty-ninth possible implementations of the first aspect, in a fortieth possible implementation, the terminal device includes a motion sensor or an orientation sensor; receiving a signal value output by the motion sensor or the orientation sensor; determining whether a mobile phone is in a relatively stable state; and if yes, triggering the step of determining whether the change rule of the output multiple light intensity signals is compliant with the preset change rule corresponding to the non-touch gesture.

With reference to the first aspect or any one of the first to fortieth possible implementations of the first aspect, in a forty-first possible implementation, the determining whether the change rule of the output multiple light intensity signals is compliant with the preset change rule corresponding to the non-touch gesture includes: every time when one of the light intensity signals output by the light sensor is received, determining, according to one or more of the light intensity signals output by the light sensor which are received last time or multiple times, whether the change rule of the output multiple light intensity signals is compliant with the preset change rule corresponding to the non-touch gesture.

With reference to the first aspect or any one of the first to forty-first possible implementations of the first aspect, in a forty-second possible implementation, the non-touch gesture includes an up-swipe gesture, or a down-swipe gesture, or a left-swipe gesture, or a right-swipe gesture, and the terminal application includes a picture application or an e-book application, where: the up-swipe gesture includes a bottom-to-up swipe of the operation object in the sensing range of the first light sensor and the second light sensor; the down-swipe gesture includes a top-to-down swipe of the operation object in the sensing range of the first light sensor and the second light sensor; the left-swipe gesture includes a right-to-left swipe of the operation object in the sensing range of the first light sensor and the second light sensor; and the right-swipe gesture includes a left-to-right swipe of the operation object in the sensing range of the first light sensor and the second light sensor; and the executing a control operation corresponding to the recognized non-touch gesture, for a terminal application includes: executing a control operation of up page flipping or dragging, down page flipping or dragging, left page flipping or dragging, or right page flipping or dragging respectively corresponding to the up-swipe gesture, or the down-swipe gesture, or the left-swipe gesture, or the right-swipe gesture, for the picture or e-book application.

With reference to the first aspect or any one of the first to forty-second possible implementations of the first aspect, in a forty-third possible implementation, when the non-touch gesture includes a press gesture and/or an uplift gesture, and the terminal application includes a picture application or an e-book application, the executing a control operation corresponding to the recognized non-touch gesture, for a terminal application includes: executing a zoom operation corresponding to the press gesture and/or the uplift gesture, for the picture application or the e-book application.

With reference to any one of the twelfth, fifteenth, and thirty-fourth possible implementations of the first aspect, in a forty-fourth possible implementation, the method further includes obtaining an uplift extent of the uplift gesture; and the executing a control operation corresponding to the recognized non-touch gesture, for a terminal application includes: executing a zoom operation corresponding to the uplift gesture, for the picture application or the e-book application, where a zoom ratio is determined according to the uplift extent when the zoom operation is executed.

With reference to any one of the thirteenth, seventeenth, and thirty-second possible implementations of the first aspect, in a forty-fifth possible implementation, the method further includes obtaining a press extent of the press gesture; and the executing a control operation corresponding to the recognized non-touch gesture, for a terminal application includes: executing a zoom operation corresponding to the press gesture, for the picture application or the e-book application, where a zoom ratio is determined according to the press extent when the zoom operation is executed.

With reference to the eleventh possible implementation of the first aspect, in a forty-sixth possible implementation, the first threshold is a typical decrement of light intensity when the light sensor is blocked by the operation object that generates the swipe gesture; and the second threshold is a typical increment of light intensity when the operation object that generates the swipe gesture leaves after the light sensor is blocked.

In a forty-seventh possible implementation of the first aspect, the multiple light sensors are N light sensors, and the non-touch gesture includes at least one press gesture and at least one uplift gesture, where the press gesture includes a progressive motion of an operation object in a sensing range of at least two light sensors among the N light sensors in a direction toward the at least two light sensors, and the uplift gesture includes a progressive motion of the operation object in a sensing range of at least two light sensors among the N light sensors in a direction away from the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a decreasing fluctuation rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

In a second aspect, the present invention provides an apparatus for controlling a terminal device by using a non-touch gesture, where the apparatus is applicable to a terminal device including one or multiple light sensors, and the apparatus includes: a receiving unit, configured to receive multiple light intensity signals that are output by the light sensor according to a light intensity change in a period of time and reflect the light intensity change, where the light intensity change is generated by the non-touch gesture; a gesture recognizing unit, configured to determine whether a change rule of the multiple light intensity signals that are received by the receiving unit is compliant with a preset change rule corresponding to the non-touch gesture, and if compliant, recognize the non-touch gesture corresponding to the multiple light intensity signals; and an executing unit, configured to execute a control operation corresponding to the non-touch gesture recognized by the gesture recognizing unit, for a terminal application.

In a first possible implementation of the second aspect, the one or multiple light sensors include a first light sensor, and the non-touch gesture includes a swipe gesture, where the swipe gesture includes a unidirectional swipe of an operation object in a sensing range of the first light sensor; and the preset change rule corresponding to the non-touch gesture includes: light intensity reflected by multiple light intensity signals being compliant with a decreasing change rule, and then compliant with an increasing change rule in a first predetermined period of time.

In a second possible implementation of the second aspect, the multiple light sensors include a first light sensor and a second light sensor, and the non-touch gesture includes a right-swipe gesture, where the right-swipe gesture includes a left-to-right swipe of an operation object in a sensing range of the first light sensor and the second light sensor; and the preset change rule corresponding to the non-touch gesture includes: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, where the first light sensor is placed to the left of the second light sensor.

In a third possible implementation of the second aspect, the multiple light sensors include a first light sensor and a second light sensor, and the non-touch gesture includes a left-swipe gesture, where the left-swipe gesture includes a right-to-left swipe of an operation object in a sensing range of the first light sensor and the second light sensor; and the preset change rule corresponding to the non-touch gesture includes: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, where the first light sensor is placed to the left of the second light sensor.

With reference to the second and third possible implementations of the second aspect, when the terminal device includes multiple light sensors, an equal horizontal distance exists between placement positions of any two adjacent light sensors, and the horizontal distance is maximal.

In a fourth possible implementation of the second aspect, the multiple light sensors include a first light sensor and a second light sensor, and the non-touch gesture includes a down-swipe gesture, where the down-swipe gesture includes a top-to-down swipe of an operation object in a sensing range of the first light sensor and the second light sensor; and the preset change rule corresponding to the non-touch gesture includes: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, where the first light sensor is placed above the second light sensor.

In a fifth possible implementation of the second aspect, the multiple light sensors include a first light sensor and a second light sensor, and the non-touch gesture includes an up-swipe gesture, where the up-swipe gesture includes a bottom-to-up swipe of an operation object in a sensing range of the first light sensor and the second light sensor; and the preset change rule corresponding to the non-touch gesture includes: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, where the first light sensor is placed above the second light sensor.

With reference to either one of the fourth and fifth possible implementations of the second aspect, when the terminal device includes multiple light sensors, an equal vertical distance exists between placement positions of any two adjacent light sensors, and the vertical distance is maximal.

With reference to any one of the first to fifth possible implementations of the second aspect, the first predetermined period of time is a typical value of time needed when a user makes a swipe with respect to any sensor.

With reference to any one of the second to fifth possible implementations of the second aspect, the second predetermined period of time is a typical value of a time interval between first time of recognizing the first swipe gesture corresponding to the multiple light intensity signals output by the first light sensor and second time of recognizing the second swipe gesture corresponding to the multiple light intensity signals output by the second light sensor.

In a sixth possible implementation of the second aspect, the multiple light sensors include a first light sensor and a second light sensor, and the non-touch gesture includes an up-swipe gesture, where the up-swipe gesture includes a bottom-to-up swipe of an operation object in a sensing range of the first light sensor and the second light sensor; and the preset change rule corresponding to the non-touch gesture includes: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, where the first light sensor is placed above the second light sensor.

With reference to the fifth or sixth possible implementation of the second aspect, in a seventh possible implementation, when the terminal device includes multiple light sensors, an equal vertical distance exists between placement positions of any two adjacent light sensors, and the vertical distance is maximal.

With reference to any one of the first to seventh possible implementations of the second aspect, in an eighth possible implementation, the first predetermined period of time is a typical value of time needed when a user makes a unidirectional swipe with respect to any sensor, and the unidirectional swipe may be any one of the following: a left-to-right swipe, a right-to-left swipe, a top-to-down swipe, and a bottom-to-up swipe.

With reference to any one of the second to seventh possible implementations of the second aspect, in a ninth possible implementation, the second predetermined period of time is a typical value of a time interval between first time of recognizing the first swipe gesture corresponding to the multiple light intensity signals output by the first light sensor and second time of recognizing the second swipe gesture corresponding to the multiple light intensity signals output by the second light sensor.

With reference to any one of the first to ninth possible implementations of the second aspect, in a tenth possible implementation, the multiple light intensity signals include a first light intensity signal, a second light intensity signal, and a third light intensity signal, where time of receiving the second light intensity signal is later than time of receiving the first light intensity signal, and time of receiving the third light intensity signal is later than the time of receiving the second light intensity signal; the decreasing change rule includes: signal intensity reflected by the second light intensity signal being smaller than signal intensity reflected by the first light intensity signal among the multiple light intensity signals, with a decrement not smaller than a first threshold; and the increasing change rule includes: signal intensity reflected by the third light intensity signal being greater than signal intensity reflected by the second light intensity signal among the multiple light intensity signals, with an increment not smaller than a second threshold.

With reference to any one of the first to tenth possible implementations of the second aspect, in an eleventh possible implementation, the first threshold is a typical decrement of light intensity when the light sensor is blocked by the operation object that generates the swipe gesture; and the second threshold is a typical increment of light intensity when the operation object that generates the swipe gesture leaves after the light sensor is blocked.

In a twelfth possible implementation of the second aspect, the light sensors include a first light sensor, and the non-touch gesture includes an uplift gesture, where the uplift gesture includes a progressive motion of an operation object in a sensing range of the first light sensor in a direction away from the first light sensor; and the preset change rule corresponding to the non-touch gesture includes: light intensity reflected by multiple light intensity signals being compliant with a first decreasing change rule, then remaining unchanged in a first predetermined period of time, then being compliant with an increasing change rule, and then remaining unchanged in a second predetermined period of time.

In a thirteenth possible implementation of the second aspect, the multiple light sensors are N light sensors, and the non-touch gesture includes an uplift gesture, where the uplift gesture includes a progressive motion of an operation object in a sensing range of at least two light sensors among the N light sensors in a direction away from the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with an increasing change rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

With reference to the twelfth or thirteenth possible implementation of the second aspect, in a fourteenth possible implementation, the multiple light intensity signals include a first light intensity signal, a second light intensity signal, a third light intensity signal, a fourth light intensity signal, and a fifth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the increasing change rule includes: signal intensity reflected by the fourth light intensity signal among the multiple light intensity signals being greater than signal intensity reflected by the third light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

In a fifteenth possible implementation of the second aspect, the light sensors include a first light sensor, and the non-touch gesture includes a press gesture, where the press gesture includes a progressive motion of an operation object in a sensing range of the first light sensor in a direction toward the first light sensor; and the preset change rule corresponding to the non-touch gesture includes: light intensity reflected by multiple light intensity signals being compliant with a first decreasing change rule, then remaining unchanged in a first predetermined period of time, then being compliant with a second decreasing change rule, and then remaining unchanged in a second predetermined period of time.

In a sixteenth possible implementation of the second aspect, the multiple light sensors are N light sensors, and the non-touch gesture includes a press gesture, where the press gesture includes a progressive motion of an operation object in a sensing range of at least two light sensors among the N light sensors in a direction toward the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a second decreasing change rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

With reference to the fifteenth or sixteenth possible implementation of the second aspect, in a seventeenth possible implementation, the multiple light intensity signals include a first light intensity signal, a second light intensity signal, a third light intensity signal, a fourth light intensity signal, and a fifth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the second decreasing change rule includes: signal intensity reflected by the fourth light intensity signal among the multiple light intensity signals being smaller than signal intensity reflected by the third light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

In an eighteenth possible implementation of the second aspect, the light sensors include a first light sensor, and the non-touch gesture includes at least one uplift gesture and at least one press gesture, where the press gesture includes a progressive motion of an operation object in a sensing range of the first light sensor in a direction toward the first light sensor, and the uplift gesture includes a progressive motion of the operation object in the sensing range of the first light sensor in a direction away from the first light sensor; and the preset change rule corresponding to the non-touch gesture includes: light intensity being compliant with a first decreasing change rule, then remaining unchanged in a first predetermined period of time, then being compliant with a decreasing fluctuation rule, and then remaining unchanged in a second predetermined period of time.

In a nineteenth possible implementation of the second aspect, the multiple light sensors are N light sensors, and the non-touch gesture includes at least one press gesture and at least one uplift gesture, where the press gesture includes a progressive motion of an operation object in a sensing range of at least two light sensors among the N light sensors in a direction toward the at least two light sensors, and the uplift gesture includes a progressive motion of the operation object in a sensing range of at least two light sensors among the N light sensors in a direction away from the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a decreasing fluctuation rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

With reference to the eighteenth or nineteenth possible implementation of the second aspect, in a twentieth possible implementation, the multiple light intensity signals include a first light intensity signal, a second light intensity signal, a third light intensity signal, a fourth light intensity signal, a fifth light intensity signal, and a sixth light intensity signal, where time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, time of receiving the fifth light intensity signal is later than the time of receiving the fourth light intensity signal, and time of receiving the sixth light intensity signal is later than the time of receiving the fifth light intensity signal; the first decreasing change rule includes: in a third predetermined period of time, signal intensity reflected by the second light intensity signal being smaller than signal intensity reflected by the first light intensity signal among the multiple light intensity signals, with a decrement not smaller than a third threshold; the remaining unchanged in a first predetermined period of time includes: signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold; the decreasing fluctuation rule includes: signal intensity reflected by the fourth light intensity signal among the multiple light intensity signals being smaller than signal intensity reflected by the third light intensity signal among the multiple light intensity signals, and then signal intensity reflected by the fifth light intensity signal among the multiple light intensity signals being greater than signal intensity reflected by the fourth light intensity signal among the multiple light intensity signals; or signal intensity reflected by the fourth light intensity signal among the multiple light intensity signals being greater than signal intensity reflected by the third light intensity signal among the multiple light intensity signals, and then signal intensity reflected by the fifth light intensity signal among the multiple light intensity signals being smaller than signal intensity reflected by the fourth light intensity signal among the multiple light intensity signals; and the remaining unchanged in a second predetermined period of time includes: signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

With reference to the twelfth or seventeenth possible implementation of the second aspect, in a twenty-first possible implementation, the first predetermined period of time is a typical value of a time interval between time of blocking the light sensor by the operation object that generates the press gesture or the uplift gesture and time of starting pressing or starting uplifting; and the second predetermined period of time is a typical value of a duration in which the light sensor is blocked when the operation object that generates the press gesture or the uplift gesture keeps motionless after being pressed or uplifted to some extent.

With reference to any one of the fourteenth, seventeenth, and nineteenth possible implementations of the second aspect, in a twenty-second possible implementation, the third predetermined period of time is a typical value of a time interval between detection time of recognizing the press gesture or the uplift gesture and time of blocking the light sensor by the operation object that generates the press gesture or the uplift gesture.

With reference to any one of the fourteenth, seventeenth, and twentieth possible implementations of the second aspect, in a twenty-third possible implementation, the third threshold is a typical decrement of light intensity when the light sensor is blocked by the operation object that generates the uplift gesture or the press gesture or gestures including at least one uplift gesture and at least one press gesture; and the fourth threshold is a typical increment or decrement of light intensity caused by the motionless operation object after the light sensor is blocked by the operation object that generates the uplift gesture or the press gesture or gestures including at least one uplift gesture and at least one press gesture and before starting of uplifting or pressing.

With reference to any one of the thirteenth, sixteenth, and nineteenth possible implementations of the second aspect, in a twenty-fourth possible implementation, the first threshold is not smaller than N/2, and the second threshold is not smaller than A/2.

With reference to the second aspect or any one of the first to twenty-fourth possible implementations of the second aspect, in a twenty-fifth possible implementation, the terminal device further includes a motion sensor or an orientation sensor, and the apparatus further includes: a mobile phone state determining unit, configured to receive a signal value output by the motion sensor or the orientation sensor, determine whether a mobile phone is in a relatively stable state, and if yes, trigger the step of determining whether the change rule of the output multiple light intensity signals is compliant with the preset change rule corresponding to the non-touch gesture, where the step is executed by the gesture recognizing unit.

With reference to the second aspect or any one of the first to twenty-fifth possible implementations of the second aspect, in a twenty-sixth possible implementation, the gesture recognizing unit includes: a real-time gesture recognizing subunit, configured to: every time when the receiving unit receives one of the light intensity signals output by the light sensor, determine, according to one or more of the light intensity signals output by the light sensor which are received by the receiving unit last time or multiple times, whether the change rule of the output multiple light intensity signals is compliant with the preset change rule corresponding to the non-touch gesture.

With reference to the second aspect or any one of the first to twenty-sixth possible implementations of the second aspect, in a twenty-seventh possible implementation, the non-touch gesture includes an up-swipe gesture, or a down-swipe gesture, or a left-swipe gesture, or a right-swipe gesture, and the terminal application includes a picture application or an e-book application, where: the up-swipe gesture includes a bottom-to-up swipe of the operation object in the sensing range of the first light sensor and the second light sensor; the down-swipe gesture includes a top-to-down swipe of the operation object in the sensing range of the first light sensor and the second light sensor; the left-swipe gesture includes a right-to-left swipe of the operation object in the sensing range of the first light sensor and the second light sensor; and the right-swipe gesture includes a left-to-right swipe of the operation object in the sensing range of the first light sensor and the second light sensor; and the executing unit includes a swipe gesture executing subunit, configured to execute a control operation of up page flipping or dragging, down page flipping or dragging, left page flipping or dragging, or right page flipping or dragging respectively corresponding to the up-swipe gesture, or the down-swipe gesture, or the left-swipe gesture, or the right-swipe gesture, for the picture or e-book application.

With reference to the second aspect or any one of the first to twenty-sixth possible implementations of the second aspect, in a twenty-eighth possible implementation, when the non-touch gesture includes a press gesture and/or an uplift gesture, and the terminal application includes a picture application or an e-book application, the executing unit includes: an uplift or press gesture executing subunit, configured to execute a zoom operation corresponding to the press gesture and/or the uplift gesture, for the picture application or the e-book application.

With reference to any one of the twelfth, fifteenth, and eighteenth possible implementations of the second aspect, in a twenty-ninth possible implementation, the apparatus further includes: an uplift extent obtaining unit, configured to obtain an uplift extent of the uplift gesture; and the executing unit includes: a first zoom executing subunit, configured to execute a zoom operation corresponding to the uplift gesture, for the picture application or the e-book application, where a zoom ratio is determined according to the uplift extent obtained by the uplift extent obtaining unit and when the zoom operation is executed.

With reference to any one of the thirteenth, sixteenth, and nineteenth possible implementations of the second aspect, in a thirtieth possible implementation, the apparatus further includes: a press extent obtaining unit, configured to obtain a press extent of the press gesture; and the executing unit includes: a second zoom executing subunit, configured to execute a zoom operation corresponding to the press gesture, for the picture application or the e-book application, where a zoom ratio is determined according to the press extent obtained by the press extent obtaining unit and when the zoom operation is executed.

In a thirty-first possible implementation of the second aspect, the multiple light sensors are N light sensors, and the non-touch gesture includes at least one press gesture and at least one uplift gesture, where the press gesture includes a progressive motion of an operation object in a sensing range of at least two light sensors among the N light sensors in a direction toward the at least two light sensors, and the uplift gesture includes a progressive motion of the operation object in a sensing range of at least two light sensors among the N light sensors in a direction away from the at least two light sensors; and the preset change rule corresponding to the non-touch gesture includes: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a decreasing fluctuation rule; and then light intensity reflected by light intensity signals output by at least one of the B light sensors respectively remaining unchanged in a second predetermined period of time; where, N, A, and B are integers greater than 1, A is not greater than N and not smaller than a first threshold, and B is not greater than A and not smaller than a second threshold.

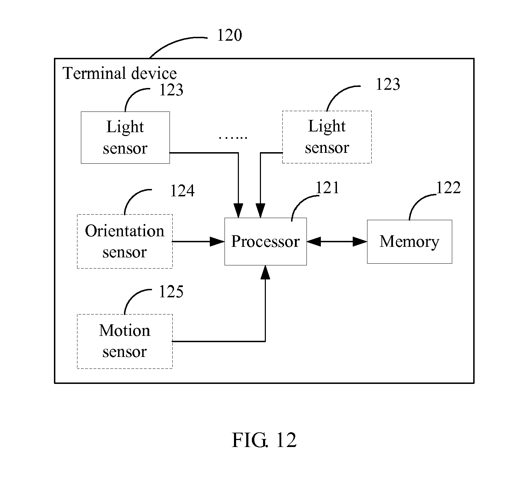

An embodiment discloses a terminal device 120, as shown in FIG. 12, including: a processor 121, a memory 122, and a light sensor 123, where:

the light sensor 123 is configured to output multiple light intensity signals reflecting a light intensity change, and one or more light sensors may be included;

the memory 122 is configured to store an application program used in the method for controlling a terminal device by using a non-touch gesture in the above embodiments;

the processor is configured to read the program in the memory, and execute the following steps:

receiving multiple light intensity signals that are output by the light sensor according to a light intensity change in a period of time and reflect the light intensity change, where the light intensity change is generated by the non-touch gesture;

determining whether a change rule of the output multiple light intensity signals is compliant with a preset change rule corresponding to the non-touch gesture, and if compliant, recognizing the non-touch gesture corresponding to the multiple light intensity signals; and

executing a control operation corresponding to the recognized non-touch gesture, for a terminal application.

The above technical solutions have the following advantages:

low algorithm complexity, small power consumption, no special requirements on the hardware configuration of a smart terminal, and being able to control the terminal device by using a non-touch gesture simply and efficiently on the terminal device through software, and enhancing user experience.

## BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings show merely some embodiments of the present invention, and a person of ordinary skill in the art may still derive other drawings from these accompanying drawings without creative efforts.

FIG. 1 is a schematic flowchart of Embodiment 1 of the present invention;
FIG. 2a is a schematic diagram of a swipe gesture according to Embodiment 2 of the present invention;
FIG. 2b is a schematic diagram of a light intensity change rule generated by the swipe gesture according to Embodiment 2 of the present invention;
FIG. 3a is a schematic diagram of an uplift gesture according to Embodiment 3 of the present invention;
FIG. 3b is a schematic diagram of a light intensity change rule generated by the uplift gesture according to Embodiment 3 of the present invention;
FIG. 4a is a schematic diagram of a press gesture according to Embodiment 3 of the present invention;
FIG. 4b is a schematic diagram of a light intensity change rule generated by the press gesture according to Embodiment 3 of the present invention;
FIG. 5 is a schematic diagram of a light intensity change rule generated by a continuous press gesture, uplift gesture, and then press gesture according to Embodiment 3 of the present invention;
FIG. 6 is a schematic diagram of recommended placement positions supporting a maximum vertical projection distance when a terminal device includes two light sensors according to Embodiment 4 of the present invention;
FIG. 7 is a schematic diagram of recommended placement positions supporting a maximum horizontal projection distance when a terminal device includes two light sensors according to Embodiment 4 of the present invention;
FIG. 8 is a schematic diagram of recommended placement positions when a terminal device includes three light sensors according to Embodiment 4 of the present invention;
FIG. 9a is a schematic diagram of a mapping of control operations to non-touch gestures for different terminal applications according to Embodiment 5 of the present invention;
FIG. 9b is a schematic diagram of another mapping of control operations to non-touch gestures for different terminal applications according to Embodiment 5 of the present invention;
FIG. 10 is a schematic diagram of an apparatus according to Embodiment 6 of the present invention;

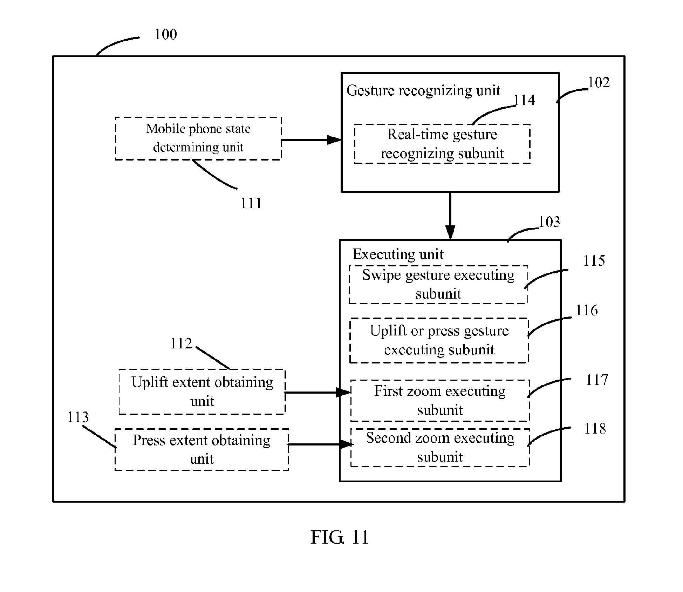

FIG. 11 is a schematic structural diagram of another apparatus according to Embodiment 6 of the present invention; and
FIG. 12 is a schematic diagram of a terminal device according to Embodiment 7 of the present invention.

## DESCRIPTION OF EMBODIMENTS

To make the objective, technical solutions, and advantages of the present invention clearer, the following further describes the present invention in detail with reference to specific embodiments and relevant accompanying drawings.

**Embodiment 1**

Embodiment 1 of the present invention provides a method for controlling a terminal device by using a non-touch gesture, where the method is applicable to a terminal device including one or multiple light sensors. The terminal device in this embodiment may be a smart phone, a tablet computer, a notebook computer, and so on; the light sensor (Light Sensor, also referred to as an ambient light sensor Ambient Light Sensor) in this embodiment is a sensor sensing visible light intensity. Light sensors are widely used on smart phones or tablet computers, and at present, most smart terminals are equipped with a light sensor which is usually located at the top of the front screen of a mobile phone, and the top or right side of the front screen of a tablet computer, and is mainly used for the terminal device to sense ambient visible light intensity for automatically adjusting screen luminance. For example, when an outdoor user uses a terminal device at daytime, screen luminance is automatically adjusted to the maximum to resist intense light; and when the user returns to a building with dark ambient light, screen luminance is automatically reduced.

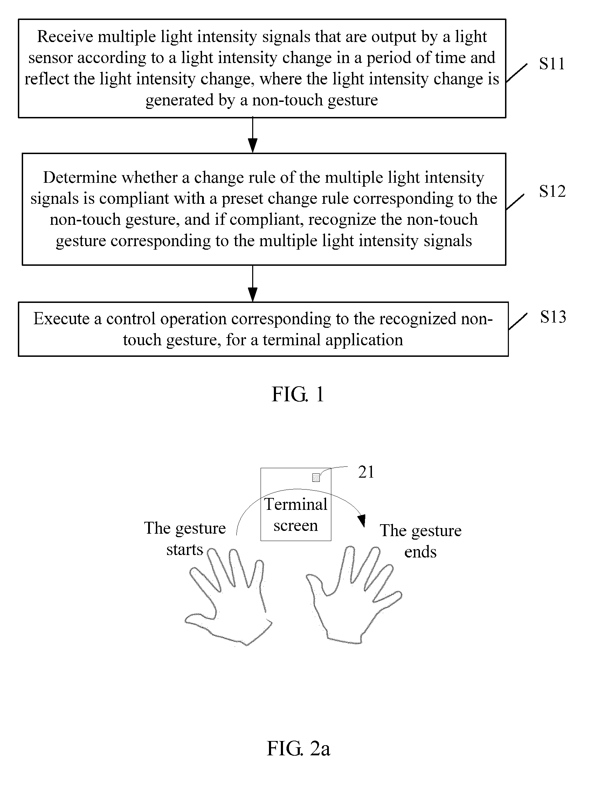

As shown in FIG. 1, the embodiment of the present invention includes the following steps:

S11. Receive multiple light intensity signals that are output by a light sensor according to a light intensity change in a period of time and reflect the light intensity change, where the light intensity change is generated by a non-touch gesture.

In this embodiment, a period of time may be a duration for completing one or more non-touch gestures; the light intensity signals reflecting light intensity may be illumination, whose physical meaning is luminous flux illuminated on a unit area, where the luminous flux uses the sensitivity of a human eye to light for reference; the unit of illumination is lumens (Lm) per square meter, also called Lux (Lux), where 1 Lux = 1 Lm/square meter.

S12. Determine whether a change rule of the output multiple light intensity signals is compliant with a preset change rule corresponding to the non-touch gesture, and if compliant, recognize the non-touch gesture corresponding to the multiple light intensity signals.

In this embodiment, the change rule of the multiple light intensity signals may be as follows: The light intensity (quantized by illumination) reflected by multiple light intensity signals changes from high to low in a period of time, or changes from low to high in a period of time, or remains unchanged in a period of time, or the change rule may be a combination of several change regularities. In this embodiment, the non-touch gesture may be a swipe gesture, an uplift gesture, a press gesture, or a combination of several gestures, where the swipe gesture may include an up-swipe gesture, a down-swipe gesture, a left-swipe gesture, or a right-swipe gesture. The preset change rule corresponding to the non-touch gesture may also be obtained by training various gestures beforehand. For example, if a swipe gesture is used, when an operation object (such as a hand) swipes a light sensor, the light intensity output by the light sensor changes (for example, the light intensity changes first from high to low, and then from low to high); in this case, the change rule may be recorded, and a change rule corresponding to the non-touch gesture is obtained. It should be noted that the change rule is not fixed, and may also be adjusted in actual use, for example, parameters related to the change rule, such as the light intensity value and detection time, are adjusted. During the specific adjustment, the parameters may be adjusted by the user by directly inputting parameters (receiving by configuring menus) or adjusted by the user by learning, or adjusted according to the ambient light intensity in the running process, and so on.

S13. Execute a control operation corresponding to the recognized non-touch gesture, for a terminal application.

In this embodiment, terminal applications may be applications such as e-books, browsing Web pages, pictures, music, and videos. The corresponding control operations may be page flipping, up-down dragging, picture zooming, volume adjustment, playing or pausing, and so on. The specific operations and the corresponding applications are not limited herein, for example, page flipping may be directed to applications such as e-books, browsing Web pages, and pictures, and playing or pausing may be directed to applications such as playing music and videos. In this embodiment, the method of a control operation corresponding to the non-touch gesture for a terminal application may be configured beforehand, or may also be defined by the user.

Further, in the embodiment of the present invention, the determining whether a change rule of the output multiple light intensity signals is compliant with a preset change rule corresponding to the non-touch gesture is specifically:

while receiving a light intensity signal, determining, according to the light intensity signals received last time or multiple times, whether the change of the light intensity is compliant with the preset change rule corresponding to the non-touch gesture. The method of processing while receiving may determine the non-touch gesture and execute a corresponding operation as soon as possible. Optionally, this embodiment may also determine, after receiving and buffering multiple light intensity signals, whether the change of the light intensity is compliant with the preset change rule corresponding to the non-touch gesture, or determine a part of signals after buffering a part of signals, and then determine, by using the method of processing while receiving, the remaining signals requiring determining.

Further, because a shake of the terminal device also causes a light change which may incorrectly trigger a gesture action, to avoid misoperations caused by the shake of the terminal device, it is necessary to first determine whether the terminal device is currently in a relatively stable state, thereby determining whether to trigger recognition of the non-touch gesture. The embodiment of the present invention uses a motion sensor or an orientation sensor to determine whether a mobile phone is in a relatively stable state, and the gesture is recognized only when the terminal device is in a relatively stable state. If the terminal device is not in a relatively stable state, it is not necessary to determine whether the change rule of the received light intensity is compliant with the change rule corresponding to the non-touch gesture.

Specifically, the state of the terminal device may be determined by a built-in motion sensor (Motion Sensor) or orientation sensor (Orientation Sensor) of most current terminals, where the motion sensor includes an accelerometer (Accelerometer), a linear accelerometer (linear Accelerometer), a gravity sensor (Gravity Sensor), a gyroscope (Gyroscope), and a rotation vector sensor (Rotation Vector Sensor).

The output of the motion sensor is a motion eigenvalue corresponding to three coordinate axes of the terminal device, for example, linear acceleration and angular acceleration; the orientation sensor outputs angles of rotation of the terminal device along the three coordinate axes, and the state of the terminal device may be determined by using a three-dimensional vector difference in the time sequence. The following describes the determining method by using only an accelerometer as an example, and the determining method using other motion sensors or orientation sensors is similar.

The determining method using an accelerometer includes: calculating vector differences of several three-axis acceleration sample values within a consecutive period of time, and if all the vector differences within the period of time are smaller than a threshold, or if an average value of the vector values is smaller than a threshold, considering that the terminal device is in a relatively stable state. The threshold is related to the sensitivity and precision of the sensor; when the user shakes slightly, a vector difference corresponding to incorrect determination of triggering gesture recognition may be obtained, and the average value is used as the threshold after statistics are collected for many times.

The above vector difference is expressed by the formula:

$$Acc\_Diff_i = \sqrt{\left(x_i - x_{i-1}\right)^2 + \left(y_i - y_{i-1}\right)^2 + \left(z_i - z_{i-1}\right)^2}$$

where, $(x_i, y_i, z_i)$ is a three-axis acceleration value output by the accelerometer at time $T_i$, and $(x_{i-1}, y_{i-1}, z_{i-1})$ is a three-axis acceleration value output by the accelerometer at time $T_{i-1}$.

Preferably, to improve determining precision, output of the above multiple sensors may be used simultaneously for comprehensive determining.

Optionally, a gesture recognizing switch may be set; if the switch is turned on, recognition of the non-touch gesture is triggered; if the switch is not turned on, recognition of the non-touch gesture is not triggered.

This embodiment recognizes a non-touch gesture by determining the change of the light intensity signals output by the light sensor, and does not need to introduce complicated two-dimensional or three-dimensional optical components, which improves user experience while implementing simplicity.

**Embodiment 2**

This embodiment, based on Embodiment 1, provides a method for controlling a terminal device by using a non-touch gesture, where specifically the method uses a swipe gesture to control a terminal device.

This embodiment may be based on one or more light sensors. Specifically, when there is one light sensor, in this embodiment, the preset change rule corresponding to the non-touch gesture includes: light intensity being compliant with a decreasing change and then compliant with an increasing change in a first predetermined period of time. If the obtained multiple light intensity signals output by a light sensor are compliant with this change, a swipe gesture is recognized.

The decreasing change includes:

signal intensity reflected by the second light intensity signal being smaller than signal intensity reflected by the first light intensity signal among the multiple light intensity signals, with a decrement not smaller than a first threshold, where the first light intensity signal and the second light intensity signal are light intensity signals among the multiple light intensity signals, and time of receiving the second light intensity signal is later than time of receiving the first light intensity signal.

The increasing change includes:

signal intensity reflected by the third light intensity signal being greater than signal intensity reflected by the second light intensity signal among the multiple light intensity signals, with a increment not smaller than a second threshold, where the third light intensity signal is a light intensity signal among the multiple light intensity signals, and time of receiving the third light intensity signal is later than the time of receiving the second light intensity signal.

The first threshold is a typical decrement of light intensity when the light sensor is blocked by an operation object that generates the swipe gesture; and the second threshold is a typical increment of light intensity when the operation object that generates the swipe gesture leaves after the light sensor is blocked. The specific value may be obtained by experiment beforehand.

For example, three light intensity signals A, B, and C are received in ascending order of time (for ease of description, the three letters also represent values of light intensity); if the light intensity of the three signals satisfies the following condition: B < A, with a decrement not smaller than the first threshold, and C > B, with an increment not greater than the second threshold, it indicates that the light intensity changes from high to low and then from low to high, and it may be considered that a swipe gesture occurs. Of course, actually, determining is not strictly limited to three signals. For example, if there is a B1 signal within a short time after the B signal, whether there is a process of changing from low to high may also be determined by determining whether C is greater than B1 with an increment not smaller than the second threshold. Because in this case, B1 closely follows B, the two values may be considered to be very close, and B1 may be used to replace B. The final purpose of this embodiment is to reduce incorrect determination by using a best algorithm. A person skilled in the art may select proper signal values for determining with reference to this embodiment, and details are not given herein.

Specifically, as shown in FIG. 2a, the swipe gesture refers to a unidirectional swipe of an operation object in a sensing range of the light sensor; for example, the front of the terminal includes a light sensor 21, and the operation object moves from one side to another side over the terminal screen, where the operation object includes a hand or an arm of a user, and also includes other objects in the hand of the user which can cause a change of light, for example, a book and a pen. The optimal distance from the swipe gesture to the screen is about 5 cm to 30 cm. The optimal distance range information may be displayed on the screen to prompt the user; meanwhile, the optimal distance range may also be adaptively adjusted according to actual light intensity, for example, when the light is weak, the upper limit of the optimal distance may be reduced properly.

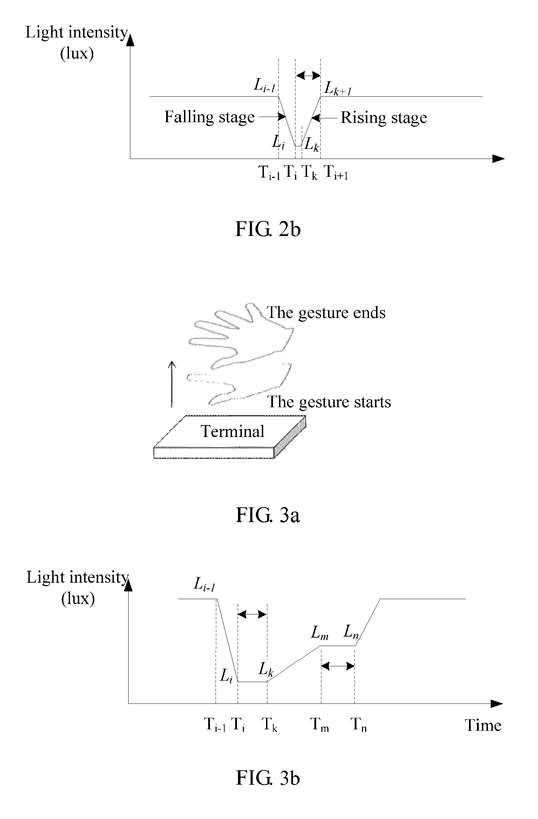

As shown in FIG. 2b, the preset change rule corresponding to the non-touch gesture includes: in a first predetermined period of time, light intensity changing from high to low, and then changing from low to high. Specifically, light intensity of the light sensor received at time $T_i$ is smaller than light intensity received at time $T_{i-1}$, and the falling extent is not smaller than the set first threshold Dec_1; this stage is called a falling stage; light intensity of the light sensor received at time $T_{k+1}$ is greater than light intensity received at time $T_k$, and the rising extent is not smaller than the set second threshold Inc_1; this stage is called a rising stage; and the first threshold and second threshold are set to reduce errors; if determining is performed without setting thresholds, it is possible that a slight light intensity change is also considered as a change from high to low and from low to high (for example, rotating a terminal device at an angle), thereby causing incorrect determination.

If the time length from $T_{i-1}$ to $T_{i-1}$ is not greater than the set first threshold T_1, it is considered that a swipe action occurs.

Specifically, at the falling stage, the falling extent $Dec_i$ may be expressed as an absolute value of the decrement between the light intensity $L_i$ at the current time and the light intensity $L_{i-1}$ at a previous time, namely,

$$Dec_i = L_{i-1} - L_i .$$

The falling extent $Dec_i$ may also be expressed as a ratio of the decrement between the light intensity $L_i$ at the current time and the light intensity $L_{i-1}$ at the previous time, to the light intensity at the previous time, namely,

$$Dec_i = \frac{L_{i-1} - L_i}{L_{i-1}} .$$

Likewise, at the rising stage, the rising extent $Inc_i$ may be expressed as an absolute value of the increment between the light intensity $L_i$ at the current time and the light intensity $L_{i-1}$ at the previous time, namely,

$$Inc_i = L_{k+1} - L_k .$$

The rising extent $Inc_k$ may also be expressed as a ratio of the increment between the light intensity $L_i$ at the current time and the light intensity $L_{i-1}$ at the previous time, to the light intensity at the previous time, namely,

$$Inc_k = \frac{L_{k+1} - L_k}{L_k} .$$

Preferably, to avoid incorrectly determining a swipe caused by a light jitter as multiple continuous swipes, if two swipe gestures are recognized within the second predetermined period of time, the control operation corresponding to the second recognized swipe gesture is not triggered, that is, a time interval between two swipes is set to be greater than a threshold, and multiple swipes within the time interval are considered as one swipe action.

Specifically, the first threshold is a typical decrement of light intensity when the light sensor is blocked by the operation object that generates the swipe gesture; and the second threshold is a typical increment of light intensity when the operation object that generates the swipe gesture leaves after the light sensor is blocked. The first predetermined period of time is a typical value of the time consumed when the user completes the swipe gesture. The second predetermined period of time is a typical value of a time interval between two swipe gestures performed by the user continuously.

Optionally, being blocked by the operation object includes being fully blocked, partially blocked, or blocked by the shadow of the operation object.

Preferably, considering that the ambient light condition of the surroundings has an impact on the light change characteristics corresponding to different gesture actions, the first threshold and second threshold of the change rule may be adaptively adjusted according to the ambient light intensity of the surroundings. For example, when the ambient light of the surroundings is intense, the first threshold and second threshold may be increased properly to reduce incorrect determination caused by a light jitter.

The first threshold, second threshold, first predetermined period of time, and second predetermined period of time may also be obtained from the gesture habit of the user by self-learning, so that the terminal device may actively adapt to the operation habit of the user. For example, before the gesture recognizing function is used, the user is required to complete several swipe gestures within a specified period of time. Output values of the light sensor include a series of light intensity signals. After the specified period of time ends, first thresholds and second thresholds corresponding to all swipe gestures, all durations of the swipe gestures, and the time interval between two swipes are averaged respectively. The corresponding average values are used as the first threshold, second threshold, first predetermined period of time, and second predetermined period of time.

Optionally, the first predetermined period of time and second predetermined period of time may also be adapted according to the gesture operation speed selected by the user on the interface. For example, three operation speeds "high, moderate, and low" are provided on the interface for the user to select; each mode corresponds to a set of time thresholds; the user determines the used time threshold after selecting a mode according to the operation habit of the user. Generally, the corresponding time threshold is smaller if the selected gesture operation speed is higher.

**Embodiment 3**

This embodiment, based on Embodiment 1, provides a method for controlling a terminal device by using a non-touch gesture, where specifically the method uses an uplift gesture, a press gesture, or at least one uplift or press gesture to control a terminal device.

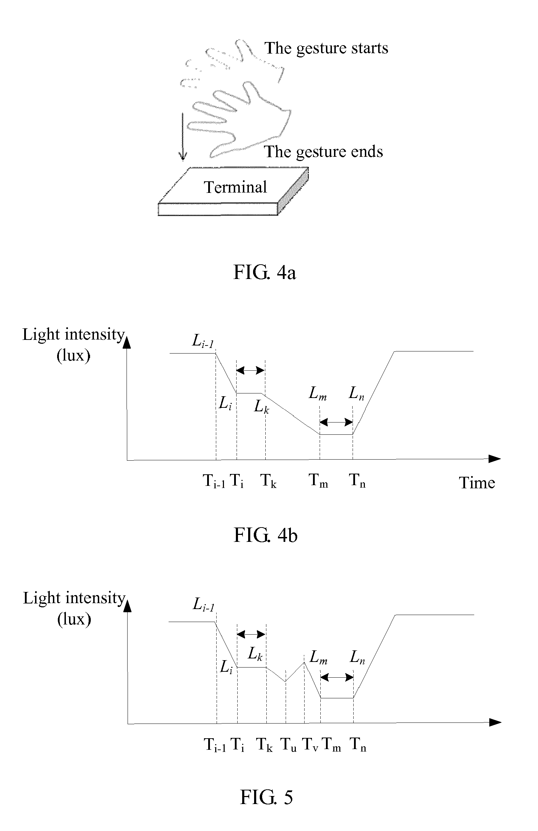

As shown in FIG. 3a, the uplift gesture refers to a progressive motion of an operation object in a sensing range of a light sensor in a direction away from the light sensor; as shown in FIG. 4a, the press gesture refers to a progressive motion of an operation object in a sensing range of the light sensor in a direction toward the light sensor, where the operation object includes a hand or an arm of a user, and also includes other objects in the hand of the user which can cause a change of light, for example, a book and a pen.

The direction away from or toward the light sensor mainly refers to a vertical direction, that is, when the light sensor is located at the front of the terminal screen, the press or uplift gesture refers to a down/down motion along the direction vertical to the terminal screen. The at least one uplift or press gesture may be a combination of continuous uplift and press actions, and the press and uplift gestures may be performed repeatedly for several times.

Further, to ensure sufficient space for uplifting, preferably, the initial distance from the uplift gesture to the screen is 5 cm, allowing a positive or negative 2-3 cm error. The distance information may be displayed on the screen to prompt the user; meanwhile, the optimal distance range may also be adaptively adjusted according to actual light intensity, for example, when the light is weak, the optimal distance may be reduced properly. To ensure sufficient space for pressing, preferably, the initial distance from the press gesture to the screen is 15 cm, allowing a positive or negative 5 cm error. The distance range information may be displayed on the screen to prompt the user; meanwhile, the optimal distance may also be adaptively adjusted according to actual light intensity, for example, when the light is weak, the optimal distance may be reduced properly.

This embodiment may be based on one or more light sensors; when there is one light sensor, the change regularities corresponding to the uplift gesture, press gesture, and a combination of at least one uplift gesture and at least one press gesture are respectively as follows:

As shown in FIG. 3b, the preset change rule corresponding to the uplift gesture includes: light intensity being compliant with a decreasing change in a third predetermined period of time, then remaining unchanged in a first predetermined period of time, then being compliant with a first low-high change, and then remaining unchanged in a second predetermined period of time.

Specifically:

As shown in FIG. 3b, the duration between $T_{i-1}$ and $T_i$ is not longer than the third predetermined period of time; the light intensity of the light sensor received at time $T_i$ is smaller than the light intensity at time $T_{i-1}$, and the falling extent is not smaller than the set third threshold Dec_2; this stage is called a falling edge;

between $T_i$ and $T_k$, where $T_k$ is later than $T_i$, and the duration between $T_k$ and $T_i$ is not longer than the first predetermined period of time T_2, the rising or falling fluctuation extent of the light intensity does not exceed a fourth threshold Dec_Inc_1;

between $T_k$ and $T_m$, the light intensity gradually increases with the uplift of the gesture, where the light intensity $L_k$ at time $T_k$ is reference light intensity; optionally, the ratio of light intensity $L_j$ at time $T_j$ to the reference light intensity may be calculated, and marked as an uplift extent Pr, where $T_j \in (T_k, T_m)$,

$$\Pr_j = \frac{L_j}{L_k} > 1$$ ;

optionally, the difference between light intensity L$_j$ at time $T_j$ and the reference light intensity may be calculated, and marked as an uplift extent Pr, where $T_j \in (T_k, T_m)$,

$$\Pr_j = L_j - L_k > 0$$ ;

between T$_m$ and T$_n$, where T$_n$ is later than T$_m$, and the duration between T$_n$ and T$_m$ is not longer than the second predetermined period of time T_3, the light intensity basically remains unchanged, and the rising or falling fluctuation extent of the light intensity does not exceed the fourth threshold Dec_Inc_1.

As shown in FIG. 4b, the preset change rule corresponding to the press gesture includes: light intensity being compliant with a decreasing change in a third predetermined period of time, then remaining unchanged in a first predetermined period of time, then being compliant with a first decreasing change, and then remaining unchanged in a second predetermined period of time. Specifically:

Referring to FIG. 4b, the duration between T$_{i-1}$ and T$_i$ is not longer than the third predetermined period of time; the light intensity of the light sensor received at time T$_i$ is smaller than the light intensity at time T$_{i-1}$, and the falling extent is not smaller than the set third threshold Dec_2; this stage is called a falling edge;

between T$_i$ and T$_k$, where T$_k$ is later than T$_i$, and the duration between T$_k$ and T$_i$ is not longer than the first predetermined period of time T_2, the rising or falling fluctuation extent of the light intensity does not exceed a fourth threshold Dec_Inc_1; between T$_k$ and T$_m$, the light intensity gradually decreases with the press of the gesture, where the light intensity L$_k$ at time T$_k$ is reference light intensity; optionally, the ratio of light intensity L$_j$ at time $T_j$ to the reference light intensity may be calculated, and marked as a press extent P$_r$, where $T_j \in (T_k, T_m)$,

$$\Pr_j = \frac{L_j}{L_k} \in (0,1)$$ ;

optionally, the difference between light intensity L$_j$ at time $T_j$ and the reference light intensity may be calculated, and marked as an uplift extent Pr, where $T_j \in (T_k, T_m)$,

$$\Pr_j = L_j - L_k < 0$$ ;

between T$_m$ and T$_n$, where T$_n$ is later than T$_m$, and the duration between T$_n$ and T$_m$ is not longer than the second predetermined period of time T_3, the light intensity basically remains unchanged, and the rising or falling fluctuation extent of the light intensity does not exceed the fourth threshold Dec_Inc_1.

The preset change rule corresponding to at least one uplift gesture and at least one press gesture includes: light intensity being compliant with a decreasing change, then remaining unchanged in a first predetermined period of time, then fluctuating between high and low, and then remaining unchanged in a second predetermined period of time.

Specifically, if the decreasing fluctuation is first compliant with a first low-high change and then a first decreasing change, the gesture is an uplift-press gesture; if the decreasing fluctuation is first compliant with a first decreasing change and then a first low-high change, the gesture is a press-uplift gesture.

Similarly to the method for determining the uplift gesture and press gesture, only between T$_k$ and T$_m$, light intensity gradually decreases with the press of the gesture, or gradually increases with the uplift of the gesture. The change fluctuates repeatedly and continuously. Optionally, the adjusting extent Pr may be calculated, and the calculation method is the same as the method for calculating the uplift extent and press extent.

FIG. 5 shows the light intensity change generated by a combination of continuous actions "press-uplift-press"; the area between T$_k$ and T$_m$ is a valid area for the combination of continuous actions "press-uplift-press": Light intensity gradually decreases with the press of the gesture when a press action occurs between T$_k$ and T$_u$; light intensity gradually increases with the uplift of the gesture when an uplift action occurs between T$_u$ and T$_v$; light intensity gradually decreases again with the press of the gesture when a press action between T$_v$ and T$_m$ occurs again.

Specifically, the first predetermined period of time is a typical value of a time interval between time of blocking the light sensor by the operation object that generates the press gesture or the uplift gesture and time of starting pressing or starting uplifting. The second predetermined period of time is a typical value of a duration in which the light sensor is blocked when the operation object that generates the press gesture or the uplift gesture keeps motionless after being pressed or uplifted to some extent. The third predetermined period of time is a typical value of a time interval between detection time of recognizing the gesture and time of blocking the light sensor by the operation object that generates the press gesture or the uplift gesture. The first predetermined period of time of the swipe gesture in Embodiment 2 is shorter than the first predetermined period of time of the press gesture, the uplift gesture, or at least one press gesture and at least one uplift gesture in this embodiment. The third threshold is a typical decrement of light intensity when the light sensor is fully blocked, partially blocked, or shadowed by the operation object that generates the uplift gesture or the press gesture or gestures including at least one uplift gesture and at least one press gesture. The fourth threshold is a typical increment or decrement of light intensity caused by the motionless gesture after the light sensor is blocked by the operation object that generates the uplift gesture or the press gesture or gestures including at least one uplift gesture and at least one press gesture and before starting of uplifting or pressing.

Optionally, being blocked by the operation object includes being fully blocked, partially blocked, or blocked by the shadow of the operation object.

Preferably, considering that the ambient light condition of the surroundings has an impact on the light change characteristics corresponding to different gesture actions, the third threshold and fourth threshold of the change rule may be adaptively adjusted according to the ambient light intensity of the surroundings. For example, when the ambient light of the surroundings is intense, the third threshold may be increased properly to reduce incorrect determination caused by a light jitter. Meanwhile, because the fluctuation range of the light intensity value output by the light sensor is large when the light is intense, the fourth threshold may be increased to increase the probability of successfully detecting the press gesture and the uplift gesture.

The third threshold, fourth threshold, first predetermined period of time, and second predetermined period of time may also be obtained from the gesture habit of the user by self-learning, so that the terminal device may actively adapt to the operation habit of the user. For example, before the gesture recognizing function is used, the user is required to complete several press gestures and uplift gestures within a specified period of time. Output values of the light sensor include a series of light intensity signals. After the specified period of time ends, third thresholds, fourth thresholds, first predetermined periods of time, and second predetermined periods of time respectively corresponding to all press gestures and uplift gestures are averaged respectively. The corresponding average values are used as the third threshold, fourth threshold, first predetermined period of time, and second predetermined period of time.

Optionally, the first predetermined period of time and second predetermined period of time may also be adapted according to the gesture operation speed selected by the user on the interface, For example, three operation speeds "high, moderate, low" are provided on the interface for the user to select; each mode corresponds to a set of time thresholds; the user determines the used time threshold after selecting a mode according to the operation habit of the user. Generally, the corresponding time threshold is smaller if the selected gesture operation speed is higher.

**Embodiment 4**

This embodiment, based on embodiments 1 and 2, provides a method for controlling a terminal device by using a non-touch gesture. Further, when the terminal includes multiple light sensors, based on multiple groups of light intensity signals output by the multiple light sensors, the direction of a swipe gesture may be recognized. A right-swipe gesture is a left-to-right swipe of the operation object in the sensing range of the light sensors; a left-swipe gesture includes a right-to-left swipe of the operation object in the sensing range of the light sensors; a down-swipe gesture includes a top-to-down swipe of the operation object in the sensing range of the light sensors; and an up-swipe gesture includes a bottom-to-up swipe of the operation object in the sensing range of the light sensors. The operation object includes a hand or an arm of a user, and also includes other objects in the hand of the user which can cause a change of light, for example, a book and a pen.

For describing the embodiment better, all directions in this embodiment are relative to the terminal in the common use state. For example, assuming that a terminal device is an ordinary mobile phone having nine physical numeric keys, generally the common use state of the mobile phone is that the side with the display screen is directed to the face of the user when the user holds the mobile phone; in this case, it may be considered that: the display screen or earpiece of the mobile phone is located at the "upper part" of the side, the nine numeric keys are located at the "lower part" of the side, the numeric key 1 is located at the "left" of the numeric key 2, and the numeric key 3 is located at the "right" of the numeric key 2.

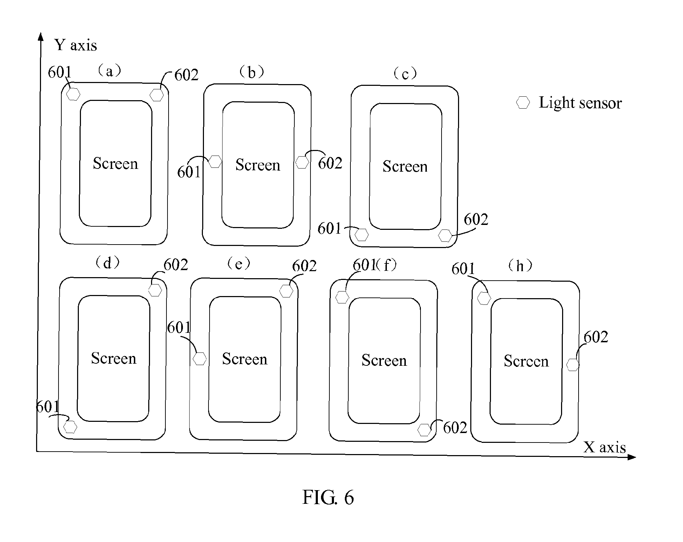

Specifically, using two light sensors as an example, when two light sensors are used in FIG. 6 to recognize a left-swipe or right-swipe gesture, preferred placement positions of the two light sensors are positions that maximize a horizontal distance between relative placement positions of the two light sensors, where the horizontal distance refers to a relative distance after the two light sensors are projected to the x-axis. The specific recognizing method is determining the left-swipe or right-swipe direction according to the distribution characteristics of time of detecting the swipe gesture by a first light sensor 601 and a second light sensor 602. Specifically, the method includes the following:

The gesture is recognized as a right-swipe gesture if the first light sensor 601 placed on the left side of the mobile phone detects a swipe gesture at time A and the second light sensor 602 placed on the right side of the mobile phone detects a swipe gesture at time B, where time B is later than time A, and the time difference between time A and time B is not greater than the second predetermined period of time.

Otherwise, the gesture is recognized as a left-swipe gesture if the second light sensor 602 placed on the right side of the mobile phone detects a swipe gesture at time A and the first light sensor 601 placed on the left side of the mobile phone detects a swipe gesture at time B, where time B is later than time A, and the time difference between time A and time B is not greater than the second predetermined period of time.

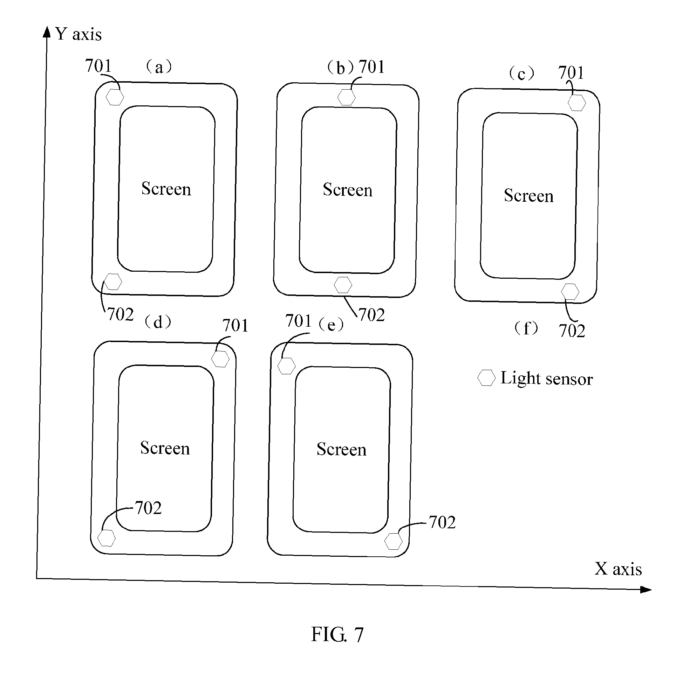

Specifically, using two light sensors as an example, when two light sensors are used in FIG. 7 to recognize an up-swipe or down-swipe gesture, preferred placement positions of the two light sensors are positions that maximize a vertical distance between relative placement positions of the two light sensors, where the vertical distance refers to a relative distance after the two light sensors are projected to the y-axis. The specific recognizing method is determining the up-swipe or down-swipe direction according to the distribution characteristics of time of detecting the swipe gesture by the first light sensor 601 and the second light sensor 602. Specifically, the method includes the following:

The gesture is recognized as a down-swipe gesture if the first light sensor 701 placed on the upper side of the mobile phone detects a swipe gesture at time A and the second light sensor 702 placed on the lower side of the mobile phone detects a swipe gesture at time B, where time B is later than time A, and the time difference between time A and time B is not greater than the second predetermined period of time.

Otherwise, the gesture is recognized as an up-swipe gesture if the second light sensor 702 placed on the lower side of the mobile phone detects a swipe gesture at time A and the first light sensor 701 placed on the upper side of the mobile phone detects a swipe gesture at time B, where time B is later than time A, and the time difference between time A and time B is not greater than the second predetermined period of time.

The second predetermined period of time is a typical value of a time interval between first time of recognizing the first swipe gesture corresponding to the multiple light intensity signals output by the first light sensor and second time of recognizing the second swipe gesture corresponding to the multiple light intensity signals output by the second light sensor.

Optionally, the second predetermined period of time may be adjusted according to sizes of different devices, placement positions of light sensors, and the habit of the user. For example, the second predetermined period of time may be increased properly when the size of the device is larger or when the horizontal or vertical distance between the two light sensors is greater due to the placement positions. Meanwhile, the user may also select different operation speeds; when the operation speed selected by the user is faster, the second predetermined period of time may be decreased properly.

Optionally, when swipe gestures are recognized respectively according to the light intensity reflected by light intensity signals output by different light sensors, the first predetermined periods of time corresponding to different light sensors may be configured to a same value or different values.

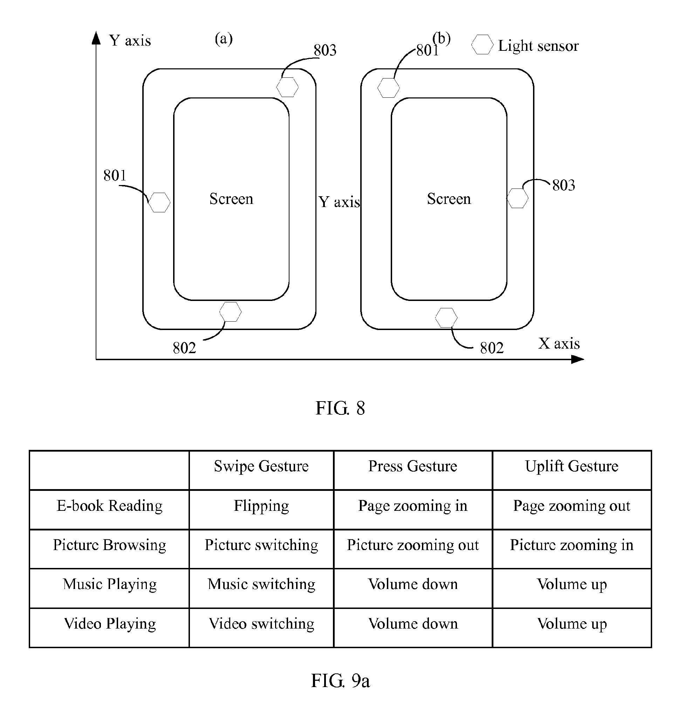

Further, using three light sensors as an example, when three light sensors are used in FIG. 8 to recognize a left-swipe or right-swipe or up-swipe or down-swipe gesture, preferred placement positions of the three light sensors are positions that make the vertical distance and horizontal distance between two adjacent light sensors of the three light sensors equal and maximal. The specific recognizing method is determining the left-swipe or right-swipe or up-swipe or down-swipe gesture direction according to the distribution characteristics of time of detecting the swipe gesture by a first light sensor 801, a second light sensor 802, and a third light sensor 803. Specifically, the method includes the following:

The swipe gesture is recognized as a right-swipe gesture if the time sequence of recognizing the swipe gesture by the three light sensors is the light sensor 801, light sensor 802, and light sensor 803, and both the time difference of detecting the swipe gesture by the light sensor 801 and light sensor 802, and the time difference of detecting the swipe gesture by the light sensor 802 and light sensor 803 are smaller than a time threshold T_6. Likewise, the swipe gesture is recognized as a left-swipe gesture if the time sequence of recognizing the swipe gesture by the three light sensors is the light sensor 803, light sensor 802, and light sensor 801, and both the time difference of detecting the swipe action by the light sensor 802 and light sensor 803, and the time difference of detecting the swipe gesture by the light sensor 802 and light sensor 803 are smaller than the threshold T_6.

It is considered that an up-swipe gesture occurs if the time sequence of recognizing the swipe gesture by the three light sensors is the light sensor 802, light sensor 801, and light sensor 803, and both the time difference of detecting the swipe action by the light sensor 802 and light sensor 801, and the time difference of detecting the swipe action by the light sensor 801 and light sensor 803 are smaller than a threshold T_7. Likewise, it is considered that a down-swipe gesture occurs if the time sequence of recognizing the swipe gesture by the three light sensors is the light sensor 803, light sensor 801, and light sensor 802, and both the time difference of detecting the swipe action by the light sensor 802 and light sensor 801, and the time difference of detecting the swipe action by the light sensor 801 and light sensor 803 are smaller than the threshold T_7.

The method for recognizing a swipe gesture by using a light intensity signal output by a single light sensor is the same as that in Embodiment 2.

Optionally, the time thresholds T_6 and T_7 may be adjusted according to sizes of different devices, device types, and the habit of the user. For example, if the size of the device is larger, the T_6 and T_7 may be increased properly. If the terminal device is a smart phone with the longitudinal length greater than the transverse length, the T_6 is set to be smaller than the T_7; if the terminal device is a tablet computer with the longitudinal length smaller than the transverse length, the T_7 is set to be smaller than the T_6. Meanwhile, the user may also select different operation speeds; when the operation speed selected by the user is faster, the T_6 and T_7 may be decreased properly.

Further, in this embodiment, multiple light sensors may be configured to improve accuracy of recognizing the press gesture and uplift gesture actions. Specifically, the press gesture, uplift gesture, and a combination of at least one uplift gesture and at least one press gesture are comprehensively determined according to the light intensity signals output by one or more light sensors. For the explanation about the gestures, reference may be made to Embodiment 3.

The preset light change rule corresponding to the uplift gesture includes:

light intensity reflected by light intensity signals output by A light sensors being respectively compliant with a change rule of changing from high to low, and then remaining unchanged in a first predetermined period of time; then light intensity reflected by light intensity signals output by B light sensors being respectively compliant with a first low-high change; and then light intensity reflected by light intensity signals output by at least one of the B light sensors respectively remaining unchanged in a second predetermined period of time; where, N, A, and B are integers greater than 1, A is not greater than N and not smaller than a first threshold, A light sensors are A light sensors among N light sensors, B light sensors are B light sensors among A light sensors, and B is not smaller than a second threshold.

The preset light change rule corresponding to the press gesture includes:

light intensity reflected by light intensity signals output by A light sensors being respectively compliant with a change rule of changing from high to low, and then remaining unchanged in a first predetermined period of time; then light intensity reflected by light intensity signals output by B light sensors being respectively compliant with a first decreasing change; and then light intensity reflected by light intensity signals output by at least one of the B light sensors respectively remaining unchanged in a second predetermined period of time; where, N, A, and B are integers greater than 1, A is not greater than N and not smaller than a first threshold, A light sensors are A light sensors among N light sensors, B light sensors are B light sensors among A light sensors, and B is not smaller than a second threshold.

The preset light change rule corresponding to at least one press gesture and at least one uplift gesture includes:

light intensity reflected by light intensity signals output by A light sensors being respectively compliant with a change rule of changing from high to low, and then remaining unchanged in a first predetermined period of time; then light intensity reflected by light intensity signals output by B light sensors respectively fluctuating between high and low; and then light intensity reflected by light intensity signals output by at least one of the B light sensors respectively remaining unchanged in a second predetermined period of time; where, N, A, and B are integers greater than 1, A is not greater than N and not smaller than a first threshold, A light sensors are A light sensors among N light sensors, B light sensors are B light sensors among A light sensors, and B is not smaller than a second threshold.

Optionally, the first threshold is not smaller than N/2, and the second threshold is not smaller than A/2.

Specifically, for the explanation about the decreasing change, remaining unchanged in the first predetermined period of time, remaining unchanged in the second predetermined period of time, first low-high change, first decreasing change, and fluctuation between high and low, reference may be made to Embodiment 3.

Further, based on Embodiment 3, according to the received multiple light intensity signals output by B light sensors, the uplift extent or press extent of the gesture is calculated respectively, and weight sum calculation is performed to obtain a comprehensive uplift extent or press extent. Specifically, using the press extent Pr as an example, the formula is:

$$\mathrm{Pr} = \sum_{j=1}^{B} k_j \cdot \mathrm{Pr}_j, \quad 0 < k_j < 1, \sum_{j=1}^{B} k_j = 1$$

where, $\mathrm{Pr}_j$ is a press extent of a $j^{th}$ (j <= B) light sensor, $k_j$ is the corresponding weighting factor, and $k_j$ may be selected according to parameters of each light sensor, such as precision and sensitivity.

In addition, weighted averaging may be performed for the reference light intensity of B light sensors to obtain the average reference light intensity $L_{BL}$; then weighted averaging may be performed for the current light intensity of B light sensors to obtain the current average light intensity $L_{avg}$; afterward, the press extent Pr is obtained according to the ratio or difference between the average reference light intensity and the current average light intensity. For the explanation about the reference light intensity and current light intensity, reference may be made to Embodiment 3, namely,

$$L_{BL} = \sum_{i=1}^{B} p_i \cdot L_{BL}^i, \ 0 < p_i < 1, \ \sum_{j=1}^{B} p_j = 1$$

$$L_{avg} = \sum_{i=1}^{B} q_i \cdot L^i, \ 0 < q_i < 1, \ \sum_{j=1}^{B} q_j = 1$$

$$\mathrm{Pr} = \frac{L_{avg}}{L_{BL}}$$

or

$$\mathrm{Pr} = L_{avg} - L_{BL}$$

where, $L_{BL}^i$ is the reference light intensity of an $i^{th}$ (i <= B) light sensor, $L^i$ is the current light intensity of the $i^{th}$ (i <= B) light sensor, and and $q_j$ are corresponding weighting factors. The weight factors may be selected according to parameters of each light sensor, such as precision and sensitivity.

**Embodiment 5**

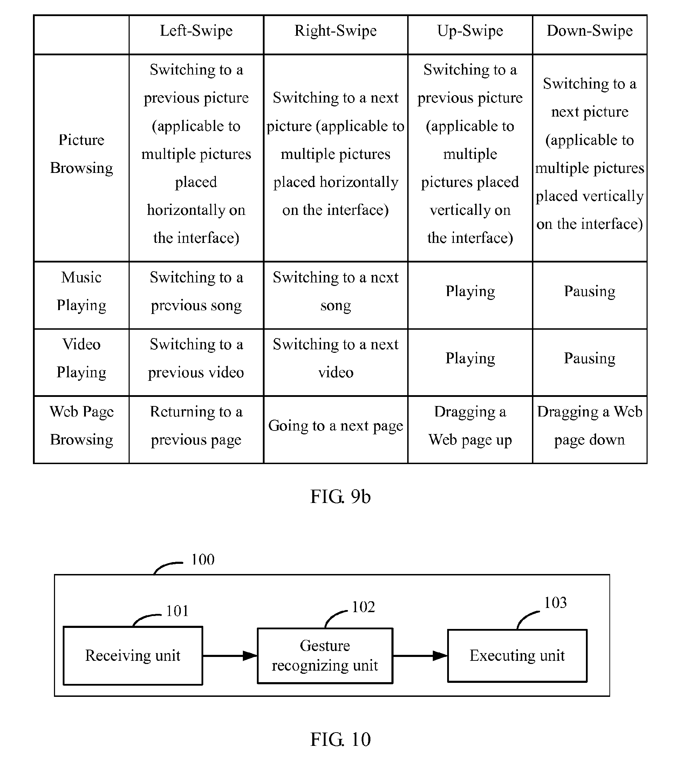

This embodiment, based on the above embodiments, provides a method for controlling a terminal device by using a non-touch gesture; further, when executing a control operation corresponding to a recognized non-touch gesture, for a terminal application, the method includes a mapping of specific control operations to recognized non-touch gestures in different terminal applications. The mapping of a gesture action may be changed according to different terminal applications. For example, FIG. 9a lists a preferred mapping of control operations to the swipe gesture, press gesture, and uplift gesture in four application scenarios, namely, e-books, picture browsing, music playing, and video playing. FIG. 9b shows a preferred mapping of up-down-left-right swipe gesture actions in application scenarios of picture browsing, music playing, video playing, and Web page browsing. The mapping of gesture actions may be preset in application software, and may also be defined by the user and adjusted according to the user's preference.

Further, the press extent corresponding to the press gesture may be used to adjust the zoom-out ratio of picture browsing in real time, or adjust the volume decrease ratio during musing playing. For example, when the user uses a press gesture in the picture browsing process and the press extent Pr = 0.5 (ratio), the displayed picture size is zoomed out to 0.5 times the original picture size. Generally, the Pr in the press gesture process is a value that decreases slowly over the time, and the animation effect of gradual zooming out may be reached by controlling the picture display size through the Pr.

Likewise, the uplift extent corresponding to the uplift gesture may be used to adjust the zoom-in ratio of picture browsing in real time, and adjust the volume increase ratio during music playing. For example, when the user uses an uplift gesture in the picture browsing process and the uplift extent Lr = 2, the displayed picture size is zoomed in to twice the original picture size. Generally, the Lr in the uplift gesture process is a value that increases slowly over the time, and the animation effect of gradual zooming in may be reached by controlling the picture display size through the Lr.

The combination of continuous actions of press gestures and uplift gestures may be used to trigger continuous picture zooming or volume adjusting operations, and help the user to adjust a picture to a proper size through repetitive fine adjustment, or adjust the volume to a proper value. For example, if the user completes the "press-uplift-press" gesture, and the corresponding adjusting extent Ar is "0.5-0.7-0.6" (ratio), the displayed picture size is first zoomed out to 0.5 times the original picture size, then zoomed in to 0.7 times, then zoomed out to 0.6 times, forming a continuous zooming animation effect.

It should be noted that a person skilled in the art may recognize multiple non-touch gestures in the above embodiment simultaneously during the specific implementation, for example, recognize not only the swipe but also the uplift and press; the specific solution for simultaneously implementing the above functions is a technology known by a person skilled in the art, and is not further described herein.

**Embodiment 6**

This embodiment, based on the above embodiments, discloses an apparatus for controlling a terminal device by using a non-touch gesture, where the apparatus is applicable to a terminal device including one or more light sensors. As shown in FIG. 10, the apparatus 100 specifically includes:

a receiving unit 101, configured to receive multiple light intensity signals that are output by the light sensor according to a light intensity change in a period of time and reflect the light intensity change, where the light intensity change is generated by the non-touch gesture;
a gesture recognizing unit 102, configured to determine whether a change rule of the multiple light intensity signals received by the receiving unit is compliant with a preset change rule corresponding to the non-touch gesture, and if compliant, recognize the non-touch gesture corresponding to the multiple light intensity signals; and
an executing unit 103, configured to execute a control operation corresponding to the non-touch gesture recognized by the gesture recognizing unit, for a terminal application.

When the terminal device includes one light sensor, the gesture recognizing unit may be configured to recognize a swipe gesture, an uplift gesture, a press gesture, and at least one uplift gesture and at least one press gesture.

When the terminal device includes N light sensors, the gesture recognizing unit may be configured to recognize an upward gesture, a downward gesture, a leftward gesture, a rightward gesture, and at least one uplift gesture and at least one press gesture.

When the terminal device includes a motion sensor or an orientation sensor, the apparatus further includes a mobile phone state determining unit 111, configured to: receive a signal value output by the motion sensor or the orientation sensor, determine whether a mobile phone is in a relatively stable state, and if not, not trigger the step of determining whether the change rule of the output multiple light intensity signals is compliant with the preset change rule corresponding to the non-touch gesture, where the step is executed by the gesture recognizing unit.

Optionally, the apparatus further includes an uplift extent obtaining unit 112, configured to obtain an uplift extent of the uplift gesture; and a press extent obtaining unit 113, configured to obtain a press extent of the press gesture.

Optionally, the gesture recognizing unit includes a real-time gesture recognizing subunit 114, configured to: every time when the receiving unit receives one of the light intensity signals output by the light sensor, determine, according to one or more of the light intensity signals output by the light sensor which are received by the receiving unit last time or multiple times, whether the change rule of the output multiple light intensity signals is compliant with the preset change rule corresponding to the non-touch gesture.

Optionally, the executing unit includes:

a swipe gesture executing subunit 115, configured to execute a control operation of up page flipping or dragging, down page flipping or dragging, left page flipping or dragging, or right page flipping or dragging respectively corresponding to the up-swipe gesture, or the down-swipe gesture, or the left-swipe gesture, or the right-swipe gesture, for the picture or e-book application;
an uplift or press gesture executing subunit 116, configured to execute a zoom operation corresponding to the press gesture and/or the uplift gesture, for the picture application or the e-book application;
a first zoom executing subunit 117, configured to execute, according to the uplift extent of the uplift gesture which is obtained by the uplift extent obtaining unit, a zoom operation corresponding to the uplift gesture, for the picture application or the e-book application, where a zoom ratio is determined according to the uplift extent obtained by the uplift extent obtaining unit and when the zoom operation is executed; and
a second zoom executing subunit 118, configured to execute, according to the press extent of the press gesture which is obtained by the press extent obtaining unit, a zoom operation corresponding to the press gesture, for the picture application or the e-book application, where a zoom ratio is determined according to the press extent obtained by the press extent obtaining unit and when the zoom operation is executed.

It should be noted that the division of units in the apparatus in this embodiment is logical division of units and does not indicate that there are physical units corresponding to those units on a one-to-one basis in an actual product. For specific function implementations of the units, reference may be made to the solutions in the foregoing embodiments, and the methods for detecting the specific gesture, based on preset regularities, are also applicable to this embodiment.

**Embodiment 7**

Based on the above embodiments, this embodiment discloses a terminal device 120, as shown in FIG. 12, including: a processor 121, a memory 122, and a light sensor 123, where:

the light sensor 123 is configured to output multiple light intensity signals reflecting a light intensity change, and one or more light sensors may be included;
the memory 122 is configured to store an application program used in the method for controlling a terminal device by using a non-touch gesture in the above embodiments;
the processor is configured to read the program in the memory, and execute the following steps:

receiving multiple light intensity signals that are output by the light sensor according to a light intensity change in a period of time and reflect the light intensity change, where the light intensity change is generated by the non-touch gesture;
determining whether a change rule of the output multiple light intensity signals is compliant with a preset change rule corresponding to the non-touch gesture, and if compliant, recognizing the non-touch gesture corresponding to the multiple light intensity signals; and
executing a control operation corresponding to the recognized non-touch gesture, for a terminal application.

Further, the terminal device may include a motion sensor 124 or an orientation sensor 125; a CPU executes the following step while executing the application program stored in the memory: determining, according to the motion sensor 124 or the orientation sensor 125, whether a mobile phone is in a relatively stable state, and if not, not triggering the step of determining, by the gesture recognizing unit, whether the change rule of the output multiple light intensity signals is compliant with the preset change rule corresponding to the non-touch gesture; or if yes, triggering the step.

In this embodiment, when the application program stored in the memory is executed by the CPU, the application program can not only execute the processing steps described in this embodiment, but also complete the step of recognizing various non-touch gestures in the foregoing embodiments and other processing steps of processing (such as obtaining the press extent), which are not described in detail herein again. Meanwhile, how to perform programming based on the solutions provided by the embodiments to specifically implement program running is a technology known by a person skilled in the art, which is also not described in detail herein again.

Through the description of the foregoing embodiments, a person skilled in the art may clearly understand that the present invention may be implemented by hardware or by firmware or a combination thereof. When the present invention is implemented by software, the above functions may be stored in a computer readable medium or serve as one or multiple instructions or codes on the computer readable medium for transmission. The computer readable medium includes a computer storage medium and a communication medium, where the communication medium includes any medium for conveniently transmitting computer programs from one place to another place. The storage medium may be any available medium that the computer can access. For example, the computer readable medium may include but is not limited to: a RAM, a ROM, an EEPROM, an optical disc, or other optical disc storage and magnetic disk storage media or other magnetic storage devices, or any other computer accessible medium that can be used to carry or store desired program codes having instructions or data structure forms. In addition, any connection may become a computer readable medium properly. For example, if software is transmitted from a website, a server, or other remote sources by using a coaxial cable, an optical cable, a twisted pair cable, or a digital subscriber line (DSL), or a wireless technology such as infrared, radio, and microwave, the coaxial cable, the optical cable, the twisted pair cable, or the DSL, or the wireless technology such as infrared, radio, and microwave is included in the fixing of the medium. For example, the disk (Disk) and disc (disc) used in the present invention include an optical disc (CD), a laser disc, an optical disc, a digital versatile disc (DVD), a floppy disk, and a blue-ray disc, where the disk is usually used to replicate data magnetically, while the disc uses laser to replicate data optically. The above combination should also fall within the protection scope of the computer readable medium.

To conclude, the above descriptions are merely exemplary embodiments of the present invention, but not intended to limit the protection scope of the present invention. Any modification, equivalent replacement, or improvement made within the spirit and principle of the present invention should fall within the protection scope of the present invention.

**Claims**

1. A method for controlling a terminal device by using a non-touch gesture, wherein the method is applicable to a terminal device comprising one or multiple light sensors, and the method comprises:

receiving multiple light intensity signals that are output by the light sensor according to a light intensity change in a period of time and reflect the light intensity change, wherein the light intensity change is generated by the non-touch gesture;

determining whether a change rule of the multiple light intensity signals is compliant with a preset change rule corresponding to the non-touch gesture, and if compliant, recognizing the non-touch gesture corresponding to the multiple light intensity signals; and

executing a control operation corresponding to the recognized non-touch gesture, for a terminal application.

2. The method according to claim 1, wherein:

the one or multiple light sensors comprise a first light sensor, and the non-touch gesture comprises a swipe gesture, wherein the swipe gesture comprises a unidirectional swipe of an operation object in a sensing range of the first light sensor; and

the preset change rule corresponding to the non-touch gesture comprises: light intensity reflected by multiple light intensity signals being compliant with a decreasing change rule and then compliant with an increasing change rule in a first predetermined period of time.

3. The method according to claim 1, wherein: the multiple light sensors comprise a first light sensor and a second light sensor, and the non-touch gesture comprises a right-swipe gesture, wherein the right-swipe gesture comprises a left-to-right swipe of an operation object in a sensing range of the first light sensor and the second light sensor; and the preset change rule corresponding to the non-touch gesture comprises: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, wherein the first light sensor is placed to the left of the second light sensor.

4. The method according to claim 1, wherein: the multiple light sensors comprise a first light sensor and a second light sensor, and the non-touch gesture comprises a left-swipe gesture, wherein the left-swipe gesture comprises a right-to-left swipe of an operation object in a sensing range of the first light sensor and the second light sensor; and the preset change rule corresponding to the non-touch gesture comprises: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, wherein the first light sensor is placed to the left of the second light sensor.

5. The method according to claim 3 or 4, wherein when the terminal device comprises multiple light sensors, an equal horizontal distance exists between placement positions of any two adjacent light sensors, and the horizontal distance is maximal.

6. The method according to claim 1, wherein: the multiple light sensors comprise a first light sensor and a second light sensor, and the non-touch gesture comprises a down-swipe gesture, wherein the down-swipe gesture comprises a top-to-down swipe of an operation object in a sensing range of the first light sensor and the second light sensor; and the preset change rule corresponding to the non-touch gesture comprises: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, wherein the first light sensor is placed above the second light sensor.

7. The method according to claim 1, wherein: the multiple light sensors comprise a first light sensor and a second light sensor, and the non-touch gesture comprises an up-swipe gesture, wherein the up-swipe gesture comprises a bottom-to-up swipe of an operation object in a sensing range of the first light sensor and the second light sensor; and the preset change rule corresponding to the non-touch gesture comprises: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, wherein the first light sensor is placed above the second light sensor.

8. The method according to claim 6 or 7, wherein when the terminal device comprises multiple light sensors, an equal vertical distance exists between placement positions of any two adjacent light sensors, and the vertical distance is maximal.

9. The method according to any one of claims 2 to 8, wherein the first predetermined period of time is a typical value of time needed when a user makes a unidirectional swipe with respect to any sensor, and the unidirectional swipe may be any one of the following: a left-to-right swipe, a right-to-left swipe, a top-to-down swipe, and a bottom-to-up swipe.

10. The method according to any one of claims 3 to 8, wherein the second predetermined period of time is a typical value of a time interval between first time of recognizing the first swipe gesture corresponding to the multiple light intensity signals output by the first light sensor and second time of recognizing the second swipe gesture corresponding to the multiple light intensity signals output by the second light sensor.

11. The method according to any one of claims 2 to 10, wherein:

the multiple light intensity signals comprise a first light intensity signal, a second light intensity signal, and a third light intensity signal, wherein time of receiving the second light intensity signal is later than time of receiving the first light intensity signal, and time of receiving the third light intensity signal is later than the time of receiving the second light intensity signal;
the decreasing change rule comprises:

signal intensity reflected by the second light intensity signal being smaller than signal intensity reflected by the first light intensity signal among the multiple light intensity signals, with a decrement not smaller than a first threshold; and

the increasing change rule comprises:

signal intensity reflected by the third light intensity signal being greater than signal intensity reflected by the second light intensity signal among the multiple light intensity signals, with an increment not smaller than a second threshold.

12. The method according to claim 11, comprising: the first threshold being a typical decrement of light intensity when the light sensor is blocked by the operation object that generates the swipe gesture; and the second threshold being a typical increment of light intensity when the operation object that generates the swipe gesture leaves after the light sensor is blocked.

13. The method according to claim 1, wherein:

the light sensors comprise a first light sensor, and the non-touch gesture comprises an uplift gesture, wherein the uplift gesture comprises a progressive motion of an operation object in a sensing range of the first light sensor in a direction away from the first light sensor; and
the preset change rule corresponding to the non-touch gesture comprises: light intensity reflected by multiple light intensity signals being compliant with a first decreasing change rule, then remaining unchanged in a first predetermined period of time, then being compliant with an increasing change rule, and then remaining unchanged in a second predetermined period of time.

14. The method according to claim 1, wherein:

the multiple light sensors are N light sensors, and the non-touch gesture comprises an uplift gesture, wherein the uplift gesture comprises a progressive motion of an operation object in a sensing range of at least two light sensors among the N light sensors in a direction away from the at least two light sensors; and
the preset change rule corresponding to the non-touch gesture comprises: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with an increasing change rule; and then light intensity reflected by light intensity signals output by at least one of the B light sensors respectively remaining unchanged in a second predetermined period of time;

wherein, N, A, and B are integers greater than 1, A is not greater than N and not smaller than a first threshold, and B is not greater than A and not smaller than a second threshold.

**15.** The method according to claim 13 or 14, wherein:

the multiple light intensity signals comprise a first light intensity signal, a second light intensity signal, a third light intensity signal, a fourth light intensity signal, and a fifth light intensity signal, wherein time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal;
the first decreasing change rule comprises:

in a third predetermined period of time, signal intensity reflected by the second light intensity signal being smaller than signal intensity reflected by the first light intensity signal among the multiple light intensity signals, with a decrement not smaller than a third threshold;

the remaining unchanged in a first predetermined period of time comprises:

signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold;

the increasing change rule comprises:

signal intensity reflected by the fourth light intensity signal among the multiple light intensity signals being greater than signal intensity reflected by the third light intensity signal among the multiple light intensity signals; and

the remaining unchanged in a second predetermined period of time comprises:

signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

**16.** The method according to claim 1, wherein:

the light sensors comprise a first light sensor, and the non-touch gesture comprises a press gesture, wherein the press gesture comprises a progressive motion of an operation object in a sensing range of the first light sensor in a direction toward the first light sensor; and
the preset change rule corresponding to the non-touch gesture comprises: light intensity reflected by multiple light intensity signals being compliant with a first decreasing change rule, then remaining unchanged in a first predetermined period of time, then being compliant with a second decreasing change rule, and then remaining unchanged in a second predetermined period of time.

**17.** The method according to claim 1, wherein:

the multiple light sensors are N light sensors, and the non-touch gesture comprises a press gesture, wherein the press gesture comprises a progressive motion of an operation object in a sensing range of at least two light sensors among the N light sensors in a direction toward the at least two light sensors; and

the preset change rule corresponding to the non-touch gesture comprises: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a second decreasing change rule; and then light intensity reflected by light intensity signals output by at least one of the B light sensors respectively remaining unchanged in a second predetermined period of time;

wherein, N, A, and B are integers greater than 1, A is not greater than N and not smaller than a first threshold, and B is not greater than A and not smaller than a second threshold.

18. The method according to claim 16 or 17, wherein:

the multiple light intensity signals comprise a first light intensity signal, a second light intensity signal, a third light intensity signal, a fourth light intensity signal, and a fifth light intensity signal, wherein time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal;

the first decreasing change rule comprises:

in a third predetermined period of time, signal intensity reflected by the second light intensity signal being smaller than signal intensity reflected by the first light intensity signal among the multiple light intensity signals, with a decrement not smaller than a third threshold;

the remaining unchanged in a first predetermined period of time comprises:

signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold;

the second decreasing change rule comprises:

signal intensity reflected by the fourth light intensity signal among the multiple light intensity signals being smaller than signal intensity reflected by the third light intensity signal among the multiple light intensity signals; and

the remaining unchanged in a second predetermined period of time comprises:

signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

19. The method according to claim 1, wherein:

the light sensors comprise a first light sensor, and the non-touch gesture comprises at least one uplift gesture and at least one press gesture, wherein the press gesture comprises a progressive motion of an operation object in a sensing range of the first light sensor in a direction toward the first light sensor, and the uplift gesture comprises a progressive motion of the operation object in the sensing range of the first light sensor in a direction away from the first light sensor; and

the preset change rule corresponding to the non-touch gesture comprises: light intensity being compliant with a first decreasing change rule, then remaining unchanged in a first predetermined period of time, then being compliant with a decreasing fluctuation rule, and then remaining unchanged in a second predetermined period of time.

**20.** The method according to claim 1, wherein:

the multiple light sensors are N light sensors, and the non-touch gesture comprises at least one press gesture and at least one uplift gesture, wherein the press gesture comprises a progressive motion of an operation object in a sensing range of at least two light sensors among the N light sensors in a direction toward the at least two light sensors, and the uplift gesture comprises a progressive motion of the operation object in a sensing range of at least two light sensors among the N light sensors in a direction away from the at least two light sensors; and the preset change rule corresponding to the non-touch gesture comprises: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a decreasing fluctuation rule; and then light intensity reflected by light intensity signals output by at least one of the B light sensors respectively remaining unchanged in a second predetermined period of time;

wherein, N, A, and B are integers greater than 1, A is not greater than N and not smaller than a first threshold, and B is not greater than A and not smaller than a second threshold.

**21.** The method according to claim 19 or 20, wherein:

the multiple light intensity signals comprise a first light intensity signal, a second light intensity signal, a third light intensity signal, a fourth light intensity signal, a fifth light intensity signal, and a sixth light intensity signal, wherein time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, time of receiving the fifth light intensity signal is later than the time of receiving the fourth light intensity signal, and time of receiving the sixth light intensity signal is later than the time of receiving the fifth light intensity signal;

the first decreasing change rule comprises:

in a third predetermined period of time, signal intensity reflected by the second light intensity signal being smaller than signal intensity reflected by the first light intensity signal among the multiple light intensity signals, with a decrement not smaller than a third threshold;

the remaining unchanged in a first predetermined period of time comprises:

signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold;

the second decreasing change rule comprises:

signal intensity reflected by the fourth light intensity signal among the multiple light intensity signals being smaller than signal intensity reflected by the third light intensity signal among the multiple light intensity signals;

the decreasing fluctuation rule comprises:

signal intensity reflected by the fourth light intensity signal among the multiple light intensity signals being smaller than signal intensity reflected by the third light intensity signal among the multiple light intensity signals, and then signal intensity reflected by the fifth light intensity signal among the multiple light intensity signals being greater than signal intensity reflected by the fourth light intensity signal among the multiple light intensity signals; or signal intensity reflected by the fourth light intensity signal among the multiple light intensity signals being greater than signal intensity reflected by the third light intensity signal among the multiple light intensity signals, and then signal intensity reflected by the fifth light intensity signal among the multiple light intensity signals being smaller than signal intensity reflected by the fourth light intensity signal among the multiple light intensity signals; and

the remaining unchanged in a second predetermined period of time comprises:

signal intensity reflected by the sixth light intensity signal among the multiple light intensity signals being not smaller than signal intensity reflected by the fifth light intensity signal among the multiple light intensity signals, with an increment not greater than the fourth threshold, or, signal intensity reflected by the sixth light intensity signal being not greater than signal intensity reflected by the fifth light intensity signal among the multiple light intensity signals, with a decrement not greater than the fourth threshold.

22. The method according to any one of claims 13 to 18, wherein:

the first predetermined period of time is a typical value of a time interval between time of blocking the light sensor by the operation object that generates the press gesture or the uplift gesture and time of starting pressing or starting uplifting; and
the second predetermined period of time is a typical value of a duration in which the light sensor is blocked when the operation object that generates the press gesture or the uplift gesture keeps motionless after being pressed or uplifted to some extent.

23. The method according to claim 15, 18, or 21, wherein the third predetermined period of time is a typical value of a time interval between detection time of recognizing the press gesture or the uplift gesture and time of blocking the light sensor by the operation object that generates the press gesture or the uplift gesture.

24. The method according to claim 15, 18, or 21, comprising:

the third threshold being a typical decrement of light intensity when the light sensor is blocked by the operation object that generates the uplift gesture or the press gesture or gestures comprising at least one uplift gesture and at least one press gesture; and
the fourth threshold being a typical increment or decrement of light intensity caused by the motionless operation object after the light sensor is blocked by the operation object that generates the uplift gesture or the press gesture or gestures comprising at least one uplift gesture and at least one press gesture and before starting of uplifting or pressing.

25. The method according to claim 14, 17, or 20, wherein the first threshold is not smaller than N/2, and the second threshold is not smaller than A/2.

26. The method according to claims 1 to 25, further comprising: the terminal device comprising a motion sensor or an orientation sensor; receiving a signal value output by the motion sensor or the orientation sensor, determining whether a mobile phone is in a relatively stable state, and if yes, triggering the step of determining whether the change rule of the output multiple light intensity signals is compliant with the preset change rule corresponding to the non-touch gesture.

27. The method according to any one of claims 1 to 26, wherein the determining whether the change rule of the output multiple light intensity signals is compliant with the preset change rule corresponding to the non-touch gesture comprises:

every time when one of the light intensity signals output by the light sensor is received, determining, according to one or more of the light intensity signals output by the light sensor which are received last time or multiple times, whether the change rule of the output multiple light intensity signals is compliant with the preset change rule corresponding to the non-touch gesture.

28. The method according to any one of claims 1 to 27, wherein the non-touch gesture comprises an up-swipe gesture, or a down-swipe gesture, or a left-swipe gesture, or a right-swipe gesture, and the terminal application comprises a picture application or an e-book application, wherein:

the up-swipe gesture comprises a bottom-to-up swipe of the operation object in the sensing range of the first light sensor and the second light sensor; the down-swipe gesture comprises a top-to-down swipe of the operation object in the sensing range of the first light sensor and the second light sensor; the left-swipe gesture comprises a right-to-left swipe of the operation object in the sensing range of the first light sensor and the second light sensor; and the right-swipe gesture comprises a left-to-right swipe of the operation object in the sensing range of the first light sensor and the second light sensor; and
the executing a control operation corresponding to the recognized non-touch gesture, for a terminal application comprises:

> executing a control operation of up page flipping or dragging, down page flipping or dragging, left page flipping or dragging, or right page flipping or dragging respectively corresponding to the up-swipe gesture, or the down-swipe gesture, or the left-swipe gesture, or the right-swipe gesture, for the picture or e-book application.

29. The method according to any one of claims 1 to 27, wherein when the non-touch gesture comprises a press gesture and/or an uplift gesture, and the terminal application comprises a picture application or an e-book application, the executing a control operation corresponding to the recognized non-touch gesture, for a terminal application comprises: executing a zoom operation corresponding to the press gesture and/or the uplift gesture, for the picture application or the e-book application.

30. The method according to claim 13 or 16 or 19, wherein: the method further comprises obtaining an uplift extent of the uplift gesture; and
the executing a control operation corresponding to the recognized non-touch gesture, for a terminal application comprises:

> executing a zoom operation corresponding to the uplift gesture, for the picture application or the e-book application, wherein a zoom ratio is determined according to the uplift extent when the zoom operation is executed.

31. The method according to claim 14 or 17 or 20, wherein: the method further comprises obtaining a press extent of the press gesture; and
the executing a control operation corresponding to the recognized non-touch gesture, for a terminal application comprises:

> executing a zoom operation corresponding to the press gesture, for the picture application or the e-book application, wherein a zoom ratio is determined according to the press extent when the zoom operation is executed.

32. An apparatus for controlling a terminal device by using a non-touch gesture, wherein the apparatus is applicable to a terminal device comprising one or multiple light sensors, and the apparatus comprises:

> a receiving unit, configured to receive multiple light intensity signals that are output by the light sensor according to a light intensity change in a period of time and reflect the light intensity change, wherein the light intensity change is generated by the non-touch gesture;
> a gesture recognizing unit, configured to determine whether a change rule of the multiple light intensity signals that are received by the receiving unit is compliant with a preset change rule corresponding to the non-touch gesture, and if compliant, recognize the non-touch gesture corresponding to the multiple light intensity signals; and
> an executing unit, configured to execute a control operation corresponding to the non-touch gesture recognized by the gesture recognizing unit, for a terminal application.

33. The apparatus according to claim 32, wherein:

> the one or multiple light sensors comprise a first light sensor, and the non-touch gesture comprises a swipe gesture, wherein the swipe gesture comprises a unidirectional swipe of an operation object in a sensing range of the first light sensor; and
> the preset change rule corresponding to the non-touch gesture comprises: light intensity reflected by multiple light intensity signals being compliant with a decreasing change rule and then compliant with an increasing change rule in a first predetermined period of time.

34. The apparatus according to claim 32, wherein: the multiple light sensors comprise a first light sensor and a second light sensor, and the non-touch gesture comprises a right-swipe gesture, wherein the right-swipe gesture comprises a left-to-right swipe of an operation object in a sensing range of the first light sensor and the second light sensor; and

the preset change rule corresponding to the non-touch gesture comprises: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, wherein the first light sensor is placed to the left of the second light sensor.

35. The apparatus according to claim 32, wherein: the multiple light sensors comprise a first light sensor and a second light sensor, and the non-touch gesture comprises a left-swipe gesture, wherein the left-swipe gesture comprises a right-to-left swipe of an operation object in a sensing range of the first light sensor and the second light sensor; and the preset change rule corresponding to the non-touch gesture comprises: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, wherein the first light sensor is placed to the left of the second light sensor.

36. The apparatus according to claim 34 or 35, wherein when the terminal device comprises multiple light sensors, an equal horizontal distance exists between placement positions of any two adjacent light sensors, and the horizontal distance is maximal.

37. The apparatus according to claim 32, wherein: the multiple light sensors comprise a first light sensor and a second light sensor, and the non-touch gesture comprises a down-swipe gesture, wherein the down-swipe gesture comprises a top-to-down swipe of an operation object in a sensing range of the first light sensor and the second light sensor; and the preset change rule corresponding to the non-touch gesture comprises: in a second predetermined period of time, recognizing that light intensity reflected by multiple light intensity signals output by the first light sensor is compliant with a decreasing change rule and then compliant with an increasing change rule in a first predetermined period of time, and then light intensity reflected by multiple light intensity signals output by the second light sensor is compliant with a decreasing change rule and then compliant with an increasing change rule in the first predetermined period of time, wherein a placement position of the first light sensor is on an upper side of a placement position of the second light sensor.

38. The apparatus according to claim 32, wherein: the multiple light sensors comprise a first light sensor and a second light sensor, and the non-touch gesture comprises an up-swipe gesture, wherein the up-swipe gesture comprises a bottom-to-up swipe of an operation object in a sensing range of the first light sensor and the second light sensor; and the preset change rule corresponding to the non-touch gesture comprises: in a second predetermined period of time, recognizing that light intensity reflected by multiple light intensity signals output by the second light sensor is compliant with a decreasing change rule and then compliant with an increasing change rule in a first predetermined period of time, and then light intensity reflected by multiple light intensity signals output by the first light sensor is compliant with a decreasing change rule and then compliant with an increasing change rule in the first predetermined period of time, wherein a placement position of the first light sensor is on an upper side of a placement position of the second light sensor.

39. The apparatus according to claim 37 or 38, wherein when the terminal device comprises multiple light sensors, an equal vertical distance exists between placement positions of any two adjacent light sensors, and the vertical distance is maximal.

40. The apparatus according to any one of claims 33 to 39, wherein the first predetermined period of time is a typical value of time needed when a user makes a unidirectional swipe with respect to any sensor, and the unidirectional swipe may be any one of the following: a left-to-right swipe, a right-to-left swipe, a top-to-down swipe, and a bottom-to-up swipe.

41. The apparatus according to any one of claims 34 to 39, wherein the second predetermined period of time is a typical value of a time interval between first time of recognizing the first swipe gesture corresponding to the multiple light intensity signals output by the first light sensor and second time of recognizing the second swipe gesture corresponding to the multiple light intensity signals output by the second light sensor.

42. The apparatus according to any one of claims 33 to 41, wherein:

the multiple light intensity signals comprise a first light intensity signal, a second light intensity signal, and a third light intensity signal, wherein time of receiving the second light intensity signal is later than time of receiving the first light intensity signal, and time of receiving the third light intensity signal is later than the time of receiving the second light intensity signal;

the decreasing change rule comprises:

signal intensity reflected by the second light intensity signal being smaller than signal intensity reflected by the first light intensity signal among the multiple light intensity signals, with a decrement not smaller than a first threshold; and

the increasing change rule comprises:

signal intensity reflected by the third light intensity signal being greater than signal intensity reflected by the second light intensity signal among the multiple light intensity signals, with an increment not smaller than a second threshold.

43. The apparatus according to claim 42, comprising: the first threshold being a typical decrement of light intensity when the light sensor is blocked by the operation object that generates the swipe gesture; and the second threshold being a typical increment of light intensity when the operation object that generates the swipe gesture leaves after the light sensor is blocked.

44. The apparatus according to claim 32, wherein:

the light sensors comprise a first light sensor, and the non-touch gesture comprises an uplift gesture, wherein the uplift gesture comprises a progressive motion of an operation object in a sensing range of the first light sensor in a direction away from the first light sensor; and
the preset change rule corresponding to the non-touch gesture comprises: light intensity reflected by multiple light intensity signals being compliant with a first decreasing change rule, then remaining unchanged in a first predetermined period of time, then being compliant with an increasing change rule, and then remaining unchanged in a second predetermined period of time.

45. The apparatus according to claim 32, wherein:

the multiple light sensors are N light sensors, and the non-touch gesture comprises an uplift gesture, wherein the uplift gesture comprises a progressive motion of an operation object in a sensing range of at least two light sensors among the N light sensors in a direction away from the at least two light sensors; and
the preset change rule corresponding to the non-touch gesture comprises: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with an increasing change rule; and then light intensity reflected by light intensity signals output by at least one of the B light sensors respectively remaining unchanged in a second predetermined period of time;
wherein, N, A, and B are integers greater than 1, A is not greater than N and not smaller than a first threshold, and B is not greater than A and not smaller than a second threshold.

46. The apparatus according to claim 44 or 45, wherein:

the multiple light intensity signals comprise a first light intensity signal, a second light intensity signal, a third light intensity signal, a fourth light intensity signal, and a fifth light intensity signal, wherein time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal;
the first decreasing change rule comprises:

in a third predetermined period of time, signal intensity reflected by the second light intensity signal being smaller than signal intensity reflected by the first light intensity signal among the multiple light intensity signals, with a decrement not smaller than a third threshold;

the remaining unchanged in a first predetermined period of time comprises:

signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold;

the increasing change rule comprises:

signal intensity reflected by the fourth light intensity signal among the multiple light intensity signals being greater than signal intensity reflected by the third light intensity signal among the multiple light intensity signals; and

the remaining unchanged in a second predetermined period of time comprises:

signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

47. The apparatus according to claim 32, wherein:

the light sensors comprise a first light sensor, and the non-touch gesture comprises a press gesture, wherein the press gesture comprises a progressive motion of an operation object in a sensing range of the first light sensor in a direction toward the first light sensor; and
the preset change rule corresponding to the non-touch gesture comprises: light intensity reflected by multiple light intensity signals being compliant with a first decreasing change rule, then remaining unchanged in a first predetermined period of time, then being compliant with a second decreasing change rule, and then remaining unchanged in a second predetermined period of time.

48. The apparatus according to claim 32, wherein:

the multiple light sensors are N light sensors, and the non-touch gesture comprises a press gesture, wherein the press gesture comprises a progressive motion of an operation object in a sensing range of at least two light sensors among the N light sensors in a direction toward the at least two light sensors; and
the preset change rule corresponding to the non-touch gesture comprises: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a second decreasing change rule; and then light intensity reflected by light intensity signals output by at least one of the B light sensors respectively remaining unchanged in a second predetermined period of time;
wherein, N, A, and B are integers greater than 1, A is not greater than N and not smaller than a first threshold, and B is not greater than A and not smaller than a second threshold.

49. The apparatus according to claim 47 or 48, wherein:

the multiple light intensity signals comprise a first light intensity signal, a second light intensity signal, a third light intensity signal, a fourth light intensity signal, and a fifth light intensity signal, wherein time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, and time of receiving the fifth light intensity signal is later than the time of receiving the fourth light intensity signal;
the first decreasing change rule comprises:

in a third predetermined period of time, signal intensity reflected by the second light intensity signal being smaller than signal intensity reflected by the first light intensity signal among the multiple light intensity signals, with a decrement not smaller than a third threshold;

the remaining unchanged in a first predetermined period of time comprises:

signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold;

the second decreasing change rule comprises:

signal intensity reflected by the fourth light intensity signal among the multiple light intensity signals being smaller than signal intensity reflected by the third light intensity signal among the multiple light intensity signals; and

the remaining unchanged in a second predetermined period of time comprises:

signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

50. The apparatus according to claim 32, wherein:

the light sensors comprise a first light sensor, and the non-touch gesture comprises at least one uplift gesture and at least one press gesture, wherein the press gesture comprises a progressive motion of an operation object in a sensing range of the first light sensor in a direction toward the first light sensor, and the uplift gesture comprises a progressive motion of the operation object in the sensing range of the first light sensor in a direction away from the first light sensor; and

the preset change rule corresponding to the non-touch gesture comprises: light intensity being compliant with a first decreasing change rule, then remaining unchanged in a first predetermined period of time, then being compliant with a decreasing fluctuation rule, and then remaining unchanged in a second predetermined period of time.

51. The apparatus according to claim 32, wherein:

the multiple light sensors are N light sensors, and the non-touch gesture comprises at least one press gesture and at least one uplift gesture, wherein the press gesture comprises a progressive motion of an operation object in a sensing range of at least two light sensors among the N light sensors in a direction toward the at least two light sensors, and the uplift gesture comprises a progressive motion of the operation object in a sensing range of at least two light sensors among the N light sensors in a direction away from the at least two light sensors; and

the preset change rule corresponding to the non-touch gesture comprises: light intensity reflected by multiple light intensity signals output by each of A light sensors among the N light sensors being respectively compliant with a first decreasing change rule, and then remaining unchanged in a first predetermined period of time; then light intensity reflected by multiple light intensity signals output by each of B light sensors among the A light sensors being respectively compliant with a decreasing fluctuation rule; and then light intensity reflected by light intensity signals output by at least one of the B light sensors respectively remaining unchanged in a second predetermined period of time;

wherein, N, A, and B are integers greater than 1, A is not greater than N and not smaller than a first threshold, and B is not greater than A and not smaller than a second threshold.

52. The apparatus according to claim 50 or 51, wherein:

the multiple light intensity signals comprise a first light intensity signal, a second light intensity signal, a third light intensity signal, a fourth light intensity signal, a fifth light intensity signal, and a sixth light intensity signal, wherein time of receiving the second light intensity signal is later than time of receiving the first light intensity signal, time of receiving the third light intensity signal is later than the time of receiving the second light intensity signal, time of receiving the fourth light intensity signal is later than the time of receiving the third light intensity signal, time of receiving the fifth light intensity signal is later than the time of receiving the fourth light intensity signal, and time of receiving the sixth light intensity signal is later than the time of receiving the fifth light intensity signal;

the first decreasing change rule comprises:

in a third predetermined period of time, signal intensity reflected by the second light intensity signal being smaller than signal intensity reflected by the first light intensity signal among the multiple light intensity signals, with a decrement not smaller than a third threshold;

the remaining unchanged in a first predetermined period of time comprises:

signal intensity reflected by the third light intensity signal among the multiple light intensity signals being not smaller than signal intensity reflected by the second light intensity signal among the multiple light intensity signals, with an increment not greater than a fourth threshold, or, signal intensity reflected by the third light intensity signal being not greater than signal intensity reflected by the second light intensity signal among the multiple light intensity signals, with a decrement not greater than a fourth threshold;

the decreasing fluctuation rule comprises:

signal intensity reflected by the fourth light intensity signal among the multiple light intensity signals being smaller than signal intensity reflected by the third light intensity signal among the multiple light intensity signals, and then signal intensity reflected by the fifth light intensity signal among the multiple light intensity signals being greater than signal intensity reflected by the fourth light intensity signal among the multiple light intensity signals; or
signal intensity reflected by the fourth light intensity signal among the multiple light intensity signals being greater than signal intensity reflected by the third light intensity signal among the multiple light intensity signals, and then signal intensity reflected by the fifth light intensity signal among the multiple light intensity signals being smaller than signal intensity reflected by the fourth light intensity signal among the multiple light intensity signals; and

the remaining unchanged in a second predetermined period of time comprises:

signal intensity reflected by the fifth light intensity signal among the multiple light intensity signals being not smaller than signal intensity reflected by the fourth light intensity signal among the multiple light intensity signals, with an increment not greater than the fourth threshold, or, signal intensity reflected by the fifth light intensity signal being not greater than signal intensity reflected by the fourth light intensity signal among the multiple light intensity signals, with a decrement not greater than the fourth threshold.

53. The apparatus according to any one of claims 44 to 49, wherein:

the first predetermined period of time is a typical value of a time interval between time of blocking the light sensor by the operation object that generates the press gesture or the uplift gesture and time of starting pressing or starting uplifting; and
the second predetermined period of time is a typical value of a duration in which the light sensor is blocked when the operation object that generates the press gesture or the uplift gesture keeps motionless after being pressed or uplifted to some extent.

54. The apparatus according to claim 46, 49, or 51, wherein the third predetermined period of time is a typical value of a time interval between detection time of recognizing the press gesture or the uplift gesture and time of blocking the light sensor by the operation object that generates the press gesture or the uplift gesture.

55. The apparatus according to claim 46, 49, or 52, comprising:

the third threshold being a typical decrement of light intensity when the light sensor is blocked by the operation object that generates the uplift gesture or the press gesture or gestures comprising at least one uplift gesture and at least one press gesture; and

the fourth threshold being a typical increment or decrement of light intensity caused by the motionless operation object after the light sensor is blocked by the operation object that generates the uplift gesture or the press gesture or gestures comprising at least one uplift gesture and at least one press gesture and before starting of uplifting or pressing.

56. The method according to claim 45, 48, or 51, wherein the first threshold is not smaller than N/2, and the second threshold is not smaller than A/2.

57. The apparatus according to claims 32 to 56, wherein: the terminal device further comprises a motion sensor or an orientation sensor, and the apparatus further comprises:

a mobile phone state determining unit, configured to receive a signal value output by the motion sensor or the orientation sensor, determine whether a mobile phone is in a relatively stable state, and if yes, trigger the step of determining whether the change rule of the output multiple light intensity signals is compliant with the preset change rule corresponding to the non-touch gesture, wherein the step is executed by the gesture recognizing unit.

58. The apparatus according to claims 32 to 57, wherein the gesture recognizing unit comprises:

a real-time gesture recognizing subunit, configured to: every time when the receiving unit receives one of the light intensity signals output by the light sensor, determine, according to one or more of the light intensity signals output by the light sensor which are received by the receiving unit last time or multiple times, whether the change rule of the output multiple light intensity signals is compliant with the preset change rule corresponding to the non-touch gesture.

59. The apparatus according to claims 32 to 58, wherein:

the non-touch gesture comprises an up-swipe gesture, or a down-swipe gesture, or a left-swipe gesture, or a right-swipe gesture, and the terminal application comprises a picture application or an e-book application, wherein:

the up-swipe gesture comprises a bottom-to-up swipe of the operation object in the sensing range of the first light sensor and the second light sensor; the down-swipe gesture comprises a top-to-down swipe of the operation object in the sensing range of the first light sensor and the second light sensor; the left-swipe gesture comprises a right-to-left swipe of the operation object in the sensing range of the first light sensor and the second light sensor; and the right-swipe gesture comprises a left-to-right swipe of the operation object in the sensing range of the first light sensor and the second light sensor; and

the executing unit comprises a swipe gesture executing subunit, configured to execute a control operation of up page flipping or dragging, down page flipping or dragging, left page flipping or dragging, or right page flipping or dragging respectively corresponding to the up-swipe gesture, or the down-swipe gesture, or the left-swipe gesture, or the right-swipe gesture, for the picture or e-book application.

60. The apparatus according to any one of claims 32 to 58, wherein when the non-touch gesture comprises a press gesture and/or an uplift gesture, and the terminal application comprises a picture application or an e-book application, the executing unit comprises:

an uplift or press gesture executing subunit, configured to execute a zoom operation corresponding to the press gesture and/or the uplift gesture, for the picture application or the e-book application.

61. The apparatus according to claim 44, 47, or 50, further comprising:

an uplift extent obtaining unit, configured to obtain an uplift extent of the uplift gesture; wherein:

the executing unit comprises: a first zoom executing subunit, configured to execute a zoom operation corresponding to the uplift gesture, for the picture application or the e-book application, wherein a zoom ratio is determined according to the uplift extent obtained by the uplift extent obtaining unit and when the zoom operation is executed.

**62.** The apparatus according to claim 45, 48, or 51, further comprising:

a press extent obtaining unit, configured to obtain a press extent of the press gesture; wherein:

the executing unit comprises: a second zoom executing subunit, configured to execute a zoom operation corresponding to the press gesture, for the picture application or the e-book application, wherein a zoom ratio is determined according to the press extent obtained by the press extent obtaining unit and when the zoom operation is executed.

Receive multiple light intensity signals that are output by a light sensor according to a light intensity change in a period of time and reflect the light intensity change, where the light intensity change is generated by a non-touch gesture /— S11

Determine whether a change rule of the multiple light intensity signals is compliant with a preset change rule corresponding to the non-touch gesture, and if compliant, recognize the non-touch gesture corresponding to the multiple light intensity signals /— S12

Execute a control operation corresponding to the recognized non-touch gesture, for a terminal application /— S13

FIG. 1

21

Terminal screen

The gesture starts

The gesture ends

FIG. 2a

Light intensity
(lux)

$L_{i-1}$

$L_{k+1}$

Falling stage $\longrightarrow$ $\longleftarrow$ Rising stage

$L_i$ $L_k$

$T_{i-1}$ $T_i$ $T_k$ $T_{i+1}$

FIG. 2b

The gesture ends

The gesture starts

Terminal

FIG. 3a

Light intensity
(lux)

$L_{i-1}$

$L_m$ $L_n$

$L_i$ $L_k$

$T_{i-1}$ $T_i$ $T_k$ $T_m$ $T_n$ Time

FIG. 3b

FIG. 4a

FIG. 4b

FIG. 5

FIG. 6

FIG. 7

EP 2 884 383 A1

FIG. 8

| | Swipe Gesture | Press Gesture | Uplift Gesture |
|---|---|---|---|
| E-book Reading | Flipping | Page zooming in | Page zooming out |
| Picture Browsing | Picture switching | Picture zooming out | Picture zooming in |
| Music Playing | Music switching | Volume down | Volume up |
| Video Playing | Video switching | Volume down | Volume up |

FIG. 9a

|  | Left-Swipe | Right-Swipe | Up-Swipe | Down-Swipe |
|---|---|---|---|---|
| Picture Browsing | Switching to a previous picture (applicable to multiple pictures placed horizontally on the interface) | Switching to a next picture (applicable to multiple pictures placed horizontally on the interface) | Switching to a previous picture (applicable to multiple pictures placed vertically on the interface) | Switching to a next picture (applicable to multiple pictures placed vertically on the interface) |
| Music Playing | Switching to a previous song | Switching to a next song | Playing | Pausing |
| Video Playing | Switching to a previous video | Switching to a next video | Playing | Pausing |
| Web Page Browsing | Returning to a previous page | Going to a next page | Dragging a Web page up | Dragging a Web page down |

FIG. 9b

FIG. 10

FIG. 11

FIG. 12

<table>
<tr><td colspan="2"><strong>INTERNATIONAL SEARCH REPORT</strong></td><td>International application No.<br><strong>PCT/CN2013/081387</strong></td></tr>
</table>

**A. CLASSIFICATION OF SUBJECT MATTER**

G06F 3/14 (2006.01) i

According to International Patent Classification (IPC) or to both national classification and IPC

**B. FIELDS SEARCHED**

Minimum documentation searched (classification system followed by classification symbols)

IPC: H04L; H04Q; H04M; G06F; H04W

Documentation searched other than minimum documentation to the extent that such documents are included in the fields searched

Electronic data base consulted during the international search (name of data base and, where practicable, search terms used)

WPI; EPODOC; CNPAT; CNKI: induction, sense, light, optical, sensor, contactless, gesture, movement, touch, operat+, control+

**C. DOCUMENTS CONSIDERED TO BE RELEVANT**

| Category* | Citation of document, with indication, where appropriate, of the relevant passages | Relevant to claim No. |
|---|---|---|
| A | WO 2011/160079 A1 (QUALCOMM INCORPORATED), 22 December 2011 (22.12.2011), see description, paragraphs 34-70, and figures 4-10 | 1-62 |
| A | WO 2012/018328 A1 (HEWLETT-PACKARD DEVELOPMENT COMPANY, L. P.), 09 February 2012 (09.02.2012), see the whole document | 1-62 |
| A | CN 102508549 A (BEIJING NUFRONT SOFT TECHNOLOGIES CO., LTD.), 20 June 2012 (20.06.2012), see the whole document | 1-62 |

☐ Further documents are listed in the continuation of Box C.    ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 21 October 2013 (21.10.2013) | |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer <br><br> **MIAO,Yu** <br><br> Telephone No.: (86-10) **62413327** |

Form PCT/ISA/210 (second sheet) (July 2009)

**INTERNATIONAL SEARCH REPORT**
Information on patent family members

| | International application No. |
|---|---|
| | **PCT/CN2013/081387** |

| Patent Documents referred in the Report | Publication Date | Patent Family | Publication Date |
|---|---|---|---|
| WO 2011160079 A1 | 22.12.2011 | US 2011310005 A1 | 22.12.2011 |
| | | EP 2583164 A1 | 24.04.2013 |
| | | JP 2013534009 A | 29.08.2013 |
| | | KR 20130043159 A | 29.04.2013 |
| | | CN 102971701 A | 13.03.2013 |
| WO 2012018328 A1 | 09.02.2012 | EP 2601565 A1 | 12.06.2013 |
| | | US 2013106792 A1 | 02.05.2013 |
| | | CN 103052928 A | 17.04.2013 |
| CN 102508549 A | 20.06.2012 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210375886

- CN 201210387215